(19) Europäisches Patentamt / European Patent Office / Office européen des brevets

(11) **EP 4 190 865 A1**

(12) **EUROPEAN PATENT APPLICATION**
published in accordance with Art. 153(4) EPC

(43) Date of publication:
**07.06.2023 Bulletin 2023/23**

(21) Application number: **21849349.2**

(22) Date of filing: **28.07.2021**

(51) International Patent Classification (IPC):
$C09D\ 5/00^{(2006.01)}$    $C09D\ 5/08^{(2006.01)}$
$C09D\ 5/16^{(2006.01)}$    $C09D\ 163/00^{(2006.01)}$
$C09D\ 167/08^{(2006.01)}$

(52) Cooperative Patent Classification (CPC):
**C09D 5/00; C09D 5/08; C09D 5/16; C09D 163/00; C09D 167/08**

(86) International application number:
**PCT/JP2021/027839**

(87) International publication number:
**WO 2022/025096 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2020  JP 2020129549**

(71) Applicant: **Chugoku Marine Paints, Ltd.**
**Hiroshima 739-0652 (JP)**

(72) Inventors:
- **NABE Akino**
  **Otake-shi, Hiroshima 739-0652 (JP)**
- **OKADA Masamitsu**
  **Otake-shi, Hiroshima 739-0652 (JP)**
- **NOBUKE Katsuya**
  **Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

(54) **EPOXY RESIN-BASED ANTICORROSIVE COATING COMPOSITION, ANTICORROSIVE COATING FILM, LAMINATED ANTIFOULING COATING FILM, ANTIFOULING SUBSTRATE, AND METHOD FOR MANUFACTURING ANTIFOULING SUBSTRATE**

(57)    One embodiment of the present invention relates to an epoxy resin anticorrosive coating composition, an anticorrosive coating film, a laminated antifouling coating film, an antifouling substrate, or a method of manufacturing an antifouling substrate, and relates to providing an epoxy resin anticorrosive coating composition capable of forming an anticorrosive coating film that has a well-balanced excellence in both anticorrosion property and adhesion with an antifouling coating film having a high rosin content. The epoxy resin anticorrosive coating composition contains an epoxy resin (A), an alkyd resin (B), and an amine curing agent (C).

EP 4 190 865 A1

**Description**

Technical Field

One embodiment of the present invention relates to an epoxy resin anticorrosive coating composition, an anticorrosive coating film, a laminated antifouling coating film, an antifouling substrate, or a method of manufacturing an antifouling substrate.

Background Art

In many of (large-scale) structures such as ships and underwater structures, metal substrates such as steels have conventionally been used. These structures are applied with an anticorrosive coating material to prevent corrosion due to sea water, for example, and an antifouling coating material is applied thereon to prevent biofouling.

With regard to the antifouling coating material, the use of hydrolyzable antifouling coating materials excellent in long-term antifouling performance is today's mainstream, and for the hydrolyzable antifouling coating material, coating materials containing rosins have been widely used in order to promote the elution of an antifouling agent and to improve the consumption persistence of an antifouling coating film. In particular, for ships with low vessel speed or ships having long anchorages due to irregular operation conditions, a hydrolyzable antifouling coating material having a relatively high content of rosins (e.g., the content of the rosins is 30% by mass or more with respect to 100% by mass of the total of the rosins and a resin for coating film formation) is used with the view of improving antifouling performance (e.g., Patent Literatures 1 and 2).

Citation List

Patent Literature

Patent Literature 1: JP 2002-53796 A
Patent Literature 2: JP 2019-535868 A

Summary of Invention

Technical Problem

The antifouling coating film formed from a hydrolyzable antifouling coating material having a relatively high rosin content (hereinafter, also referred to as a "antifouling coating film having a high rosin content") has been found to have a high coating film hardness and be difficult to adhere to an anticorrosive coating film as an undercoat film. In particular, in a case where there is a long interval between coating applications (interval) from the formation of the undercoat film until the applying of the antifouling coating material, the adhesion of the antifouling coating film to the undercoat film tends to be insufficient.

Moreover, as a result of studies made by the present inventors, an anticorrosive coating film excellent in adhesion with the antifouling coating film having a high rosin content also exists, but such anticorrosive coating film excellent in adhesion with the antifouling coating film having a high rosin content needs to be improved in terms of anticorrosion property.

One embodiment of the present invention provides an epoxy resin anticorrosive coating composition capable of forming an anticorrosive coating film that has a well-balanced excellence in both anticorrosion property and adhesion with an antifouling coating film having a high rosin content.

Solution to Problem

As a result of intensive studies on a method of solving the problems, the present inventors have found that the problems can be solved by a specific composition, and the present invention has been accomplished. The configuration examples of the present invention are as follows.

Note that, in the present specification, a numerical range referred by "A to B" indicates A or more and B or less.

[1] An epoxy resin anticorrosive coating composition containing: an epoxy resin (A); an alkyd resin (B); and an amine curing agent (C).

[2] The epoxy resin anticorrosive coating composition according to [1], wherein the alkyd resin (B) contains at least one resin selected from an alkyd resin (b1) and an alkyd-modified acrylic resin (b2).

[3] The epoxy resin anticorrosive coating composition according to [1] or [2], wherein a content of the alkyd resin (B) is 1 to 80 parts by mass with respect to 100 parts by mass of a solid content of the epoxy resin (A).

[4] The epoxy resin anticorrosive coating composition according to any one of [1] to [3], wherein the epoxy resin (A) contains at least one resin selected from the group consisting of a bisphenol A-type epoxy resin, a bisphenol AD-type epoxy resin, a bisphenol F-type epoxy resin, and modified epoxy resins obtained by modifying these epoxy resins.

[5] The epoxy resin anticorrosive coating composition according to any one of [1] to [4], wherein a volume ratio of a solid content (volume solid) is 50% to 100% by volume.

[6] The epoxy resin anticorrosive coating composition according to any one of [1] to [5], wherein a volume ratio of a solid content (volume solid) is 60% to 80% by volume.

[7] An anticorrosive coating film formed from the epoxy resin anticorrosive coating composition according to any one of [1] to [6].

[8] A laminated antifouling coating film containing: the anticorrosive coating film according to [7]; and an antifouling coating film in this order.

[9] The laminated antifouling coating film according to [8], wherein the antifouling coating film is a hydrolyzable antifouling coating film.

[10] The laminated antifouling coating film according to [8] or [9], wherein the antifouling coating film contains rosins.

[11] An antifouling substrate, wherein the laminated antifouling coating film according to any one of [8] to [10] is laminated on a surface of a substrate in order from the substrate, the anticorrosive coating film, and the antifouling coating film.

[12] The antifouling substrate according to [11], wherein the substrate is at least one selected from the group consisting of a ship, an underwater structure, and a fishing gear.

[13] A method of manufacturing an antifouling substrate, including: a step of forming the laminated antifouling coating film according to any one of [8] to [10] on a surface of the substrate.

Advantageous Effects of Invention

According to an embodiment of the present invention, it is possible to form an anticorrosive coating film that has a well-balanced excellence in both anticorrosion property and adhesion with an antifouling coating film having a high rosin content.

Moreover, according to an embodiment of the present invention, even in the case of a long interval between coating applications (interval) from the formation of an undercoat film until the applying of an antifouling coating material, it is possible to form an anticorrosive coating film excellent in adhesion (hereinafter, also referred to as an "interval adhesion") to an antifouling coating film having a high rosin content.

For this reason, the epoxy resin anticorrosive coating composition according to an embodiment of the present invention can be suitably used for the formation of a laminated antifouling coating film in which a substrate, an anticorrosive coating film, and an antifouling coating film, particularly an antifouling coating film containing rosins, are included in this order.

In recent years, anticorrosive coating compositions have been required to have an enhanced solid content upon demands such as environmental friendliness, volatile organic compound (VOC) regulations, and the reduction in the number of coating applications. However, when try to increase the solid content of conventional anticorrosive coating material, the adhesion between an anticorrosive coating film formed from the anticorrosive coating material and an antifouling coating film formed thereon will be lowered, and when try to improve the adhesion between an anticorrosive coating film formed from the conventional anticorrosive coating material and an antifouling coating film formed thereon, the solid content of the anticorrosive coating material won't be increased. That is, concerning the conventional anticorrosive coating materials, an enhanced solid content and the adhesion with the antifouling coating film are in a trade-off relationship, and it has been difficult to achieve both of them.

In contrast, according to an embodiment of the present invention, both an enhanced solid content and the adhesion with an antifouling coating film can be achieved, and an anticorrosive coating film excellent in adhesion with an antifouling coating film having a high rosin content can be formed even with a high solid anticorrosive coating material.

Description of Embodiments

<<Epoxy resin anticorrosive coating compositions

The epoxy resin anticorrosive coating composition (hereinafter, also referred to as "the present composition") according to an embodiment of the present invention contains an epoxy resin (A), an alkyd resin (B), and an amine curing agent (C).

The present inventors have found as a result of extensive studies that, when the alkyd resin (B) is used in the epoxy-amine anticorrosive coating composition, an anticorrosive coating film well-balanced excellence in both anticorrosion property and adhesion with an antifouling coating film having a high rosin content can be formed even with a high solid anticorrosive coating composition.

The present composition is suitable as a binder for adhesion to an object to be applied with an antifouling coating film having a high rosin content. That is, the present composition is suitably used as a composition for forming a coating film provided in contact with the antifouling coating film between an object to be applied and an antifouling coating film having a high rosin content when forming a laminated antifouling coating film. Preferred examples of the object to be applied include: a substrate on which a shop primer coating film is formed; and a substrate on which a shop primer coating film and the following other primer coating films are formed in this order from the substrate side.

The volume ratio of the solid content (volume solid) of the present composition is preferably 50% by volume or more, more preferably 55% by volume or more, and particularly preferably 60% by volume or more, and preferably 100% by volume or less, more preferably 90% by volume or less, and particularly preferably 80% by volume or less.

When the volume ratio of the solid content is within the range cited above, a coating composition suitable for coating application such as air spray, airless spray, and brush application can be easily obtained. Generally speaking, when the volume ratio of the solid content of the coating composition is 60% by volume or more, the coating composition can be said as a high solid type coating composition. Besides, the use of a composition whose volume ratio of the solid content is within the particularly preferable range described above enables to increase the film thickness that can be formed by one coating application, and to reduce the number of coating applications when forming an anticorrosive coating film excellent in anticorrosion property required to have a thickness more than a certain amount.

The term "volume ratio of solid content (volume solid) of the present composition" in the present specification was calculated from the volume of the composition and the volume of the solid content of the composition in accordance with ISO 3233:1998.

The solid content of the present composition means the mass percentage of the coating film (heating residue) after the sufficient reactive curing (heating) of the present composition, or the coating film (heating residue) per se. The solid content can be calculated according to JIS K 5601-1-2 in such a way that $1 \pm 0.1$ g of the present composition (e.g., the composition immediately after mixing a base component and a curing agent component) is weight out into a flat bottom dish, evenly spread with a wire having a known mass, dried at 23°C for 24 hours, and then the mass of the heating residue and the wire is measured after heating at a temperature of 110°C for 1 hour (under normal pressure). Note that this solid content is equivalent to the total contained amount of the solid content (components other than a solvent) of the starting material components used in the present composition.

The volume of the solid content in the present composition can be calculated from the mass and true density of the solid content of the present composition. The mass and true density of the solid content each may be a measured value or a value calculated from the starting materials used.

The present composition is typically a two-component type composition including a base component containing an epoxy resin (A) and a curing agent component containing an amine curing agent (C). Alternatively, the present composition may be a composition containing three or more components, as needed.

These base component and curing agent component, for example, each are usually kept, stored, or transported, for example, in a separate container, and they are used by blending just before use.

<Epoxy resin (A)>

The epoxy resin (A) is not particularly limited, and examples thereof include: a polymer or oligomer containing two or more epoxy groups in one molecule; and a polymer or oligomer produced by a ring-opening reaction of some of the epoxy groups.

The epoxy resin (A) may be used singly or two or more kinds thereof.

Examples of the epoxy resin (A) include bisphenol-type epoxy resins, glycidyl ester-type epoxy resins, glycidyl amine-type epoxy resins, phenol novolac type epoxy resins, cresol-type epoxy resins, dimer acid-modified epoxy resins, aliphatic epoxy resins, alicyclic epoxy resins, and epoxidized oil epoxy resins.

Specific examples of such epoxy resin (A) include: bisphenol A-type epoxy resins such as epichlorohydrin-bisphenol A resins; bisphenol AD-type epoxy resins such as epichlorohydrin-bisphenol AD resins; bisphenol F-type epoxy resins such as epichlorohydrin-bisphenol F resins; phenol novolac-type epoxy resins such as epichlorohydrin-phenol novolac resins; aromatic epoxy resins such as 3,4-epoxyphenoxy-3',4'-epoxyphenylcarboxymethane; brominated epoxy resins in which at least some hydrogen atoms bonded to a benzene ring in an epichlorohydrin-bisphenol A epoxy resin is substituted with bromine atoms; aliphatic epoxy resins produced by a reaction of epichlorohydrin and an aliphatic dihydric alcohol; polyfunctional epoxy resins produced by a reaction of epichlorohydrin and tri(hydroxyphenyl)methane;

dimer acid-modified epoxy resins produced by a modification of a bisphenol-type epoxy resin with a dimer acid (dimer of unsaturated fatty acid); and hydrogenated epoxy resin produced by a hydrogenation of an aromatic ring in a bisphenol-type epoxy resin.

The preferable epoxy resin (A) among them is at least one epoxy resin selected from the group consisting of a bisphenol A-type epoxy resin, a bisphenol AD-type epoxy resin, a bisphenol F-type epoxy resin, and modified epoxy resins produced by a modification of these bisphenol type epoxy resins, and the particularly preferable epoxy resin (A) is a bisphenol A-type epoxy resin.

The weight average molecular weight (Mw) of the epoxy resin (A) measured by GPC (gel permeation chromatography) depends on the coating application and curing conditions (e.g., air drying coating application or baking coating application) of the present composition, and cannot be set unconditionally, but is preferably 350 to 20,000.

The Mw can be measured under the conditions described in the following Examples or conditions equivalent thereto.

The viscosity (25°C) of the epoxy resin (A) is preferably 12,000 mPa·s or less, and more preferably 10,000 mPa·s or less.

The epoxy equivalent (in accordance with JIS K 7236) of the epoxy resin (A) is preferably 150 to 1,000.

The epoxy resin (A) is preferably a bisphenol A-type epoxy resin having an epoxy equivalent of 150 to 700.

Note that, when two or more kinds of epoxy resins are used as the epoxy resin (A), the weight average molecular weight and the epoxy equivalent of the epoxy resin (A) are the weight average molecular weight and the epoxy equivalent of the two or more kinds of epoxy resins as a whole, respectively.

Examples of representative bisphenol A-type epoxy resins that are liquid at normal temperature include "jER 828" (manufactured by Mitsubishi Chemical Corporation, epoxy equivalent: 180 to 200, solid content: 100% by mass), "E-028-90X" (manufactured by OHTAKE-MEISHIN CHEMICAL, CO., LTD, 828 type epoxy resin, epoxy equivalent (as solid): 180 to 200, xylene cut product, solid content: 90% by mass), and "AER 260 " (Bisphenol A-type epoxy resin, manufactured by Asahi Kasei Epoxy Co., Ltd., epoxy equivalent: 190, solid content: 100% by mass);

examples of semi-solid products at normal temperature include "jER 834-X90" (manufactured by Mitsubishi Chemical Corporation, epoxy equivalent (as solid): 230 to 270, xylene cut product, solid content: 90% by mass) and "E-834-85X(T)" (manufactured by OHTAKE-MEISHIN CHEMICAL, CO., LTD., epoxy equivalent (as solid): about 230 to 270, xylene cut product, solid content: 85% by mass); and

examples of solid products at normal temperature include "jER 1001-X75" (manufactured by Mitsubishi Chemical Corporation, epoxy equivalent (as solid): 450 to 500, xylene cut product, solid content: 75% by mass) and "E-001-75X" (manufactured by OHTAKE-MEISHIN CHEMICAL, CO., LTD., epoxy equivalent (as solid): about 450 to 500, xylene cut product, solid content: 75% by mass).

Examples of other epoxy resins include "jER 807" (manufactured by Mitsubishi Chemical Corporation, bisphenol F-type diglycidyl ether resin, epoxy equivalent: 160 to 175, solid content: 100% by mass), "FLEP-60" (Polysulfide-modified epoxy resin, manufactured by Toray Fine Chemicals Co., Ltd., epoxy equivalent: about 280, solid content: 100% by mass), "YD-172-X75" (dimer acid-modified epoxy resin, manufactured by Kukdo Chemical Co., Ltd., epoxy equivalent (as solid): 600 to 700, xylene cut product, solid content: 75% by mass), and "EPICLON 5300-70" (novolac type epoxy resin, manufactured by DIC Corporation, epoxy equivalent (as solid): 300 to 340, xylene/isobutyl alcohol cut product, solid content: 70% by mass).

The contained amount of the solid content of the epoxy resin (A) in the present composition is preferably 5% by mass or more, more preferably 7% by mass or more, and preferably 80% by mass or less, more preferably 50% by mass or less with respect to 100% by mass of the solid content of the present composition from the viewpoint of, for example, enabling to facilitate the formation of an anticorrosive coating film excellent in anticorrosion property.

<Alkyd resin (B)>

The alkyd resin (B) (alkyd-based resin (B)) is not particularly limited, but specifically, at least one resin selected from an alkyd resin (b1) and an alkyd-modified acrylic resin (b2) is preferable. Among them, the alkyd resin (B) preferably contains the alkyd-modified acrylic resin (b2) from the viewpoint of, for example, enabling to facilitate the formation of a coating film excellent in adhesion with an antifouling coating film having a high rosin content.

The alkyd resin (B) may be used singly or two or more thereof.

The content of the alkyd component in the present composition is preferably 1 part by mass or more, more preferably 2 parts by mass or more, particularly preferably 4 parts by mass or more, and preferably 80 parts by mass or less, more preferably 75 parts by mass or less, particularly preferably 70 parts by mass or less with respect to 100 parts by mass of the epoxy resin (A) from the viewpoint of, for example, enabling to facilitate the formation of an anticorrosive coating film that has a well-balanced excellence in both anticorrosion property and adhesion with an antifouling coating film having a high rosin content.

In a case where the alkyd resin (B) is the alkyd-modified acrylic resin (b2), a more preferable range of the content of the alkyd component in the present composition is 4 to 48 parts by mass with respect to 100 parts by mass of the epoxy resin (A).

When the content of the alkyd component is below the range cited above, the adhesion with an antifouling coating film having a high rosin content may be lowered, and when the content of the alkyd component is more than the range cited above, the anticorrosion property may be lowered.

Note that the alkyd component refers to the sum of the alkyd resin (b1) and an alkyd resin included in the alkyd-modified acrylic resin (b2) (alkyd-modified amount in the resin (b2)).

For example, when the present composition contains: $\alpha$ g of an alkyd resin (b1) having a solid content of X% by mass; and $\beta$ g of an alkyd-modified acrylic resin (b2) that has a solid content of Y% by mass and alkyd-modified amount of y% by mass, the amount of the alkyd component is $\alpha \times (X/100) + \beta \times (Y/100) \times (y/100)$.

The content of the alkyd resin (B) in the present composition is preferably such an amount that the content of the alkyd component falls within the range cited above, may be appropriately selected in accordance with the modified amount of the alkyd-modified acrylic resin (b2), and is preferably 1 part by mass or more, more preferably 2 parts by mass or more, and particularly preferably 4 parts by mass or more, and is preferably 80 parts by mass or less, more preferably 75 parts by mass or less, and particularly preferably 70 parts by mass or less, with respect to 100 parts by mass of the epoxy resin (A).

When the content of the alkyd resin (B) is within the range cited above, an anticorrosive coating film that has a well-balanced excellence in both anticorrosion property and adhesion with an antifouling coating film having a high rosin content can be easily formed.

[Alkyd resin (b1)]

Examples of the alkyd resin (b1) include conventionally known resins, and can be produced by conventionally known methods, but are preferably resins that are produced by polycondensation of a (semi-)drying oil or a (semi-)drying oil fatty acid, an acid component, and a polyhydric alcohol component.

The alkyd resin (b1) may be used singly or two or more kinds thereof.

Examples of the (semi-)drying oil include fish oil, dehydrated castor oil, safflower oil, linseed oil, soybean oil, sesame oil, poppy seed oil, perilla oil, hemp seed oil, grape seed oil, corn oil, tall oil, sunflower oil, cottonseed oil, walnut oil, and rubber seed oil; examples of the (semi-)drying oil fatty acid include fish oil fatty acid, dehydrated castor oil fatty acid, safflower oil fatty acid, linseed oil fatty acid, soybean oil fatty acid, sesame oil fatty acid, poppy seed oil fatty acid, perilla oil fatty acid, hemp seed oil fatty acid, grape seed oil fatty acid, corn oil fatty acid, tall oil fatty acid, sunflower oil fatty acid, cottonseed oil fatty acid, walnut oil fatty acid, and rubber seed oil fatty acid. These can be used singly or two or more thereof.

The amount of the (semi-)drying oil or (semi-)drying oil fatty acid used is preferably 20% by mass or more, more preferably 30% by mass or more, and preferably 70% by mass or less, more preferably 60% by mass or less with respect to 100% by mass of the monomer component in synthesizing the alkyd resin, from the viewpoint of, for example, enabling to facilitate the formation of an anticorrosive coating film excellent in adhesion with an antifouling coating film having a high rosin content.

Examples of the acid component include phthalic anhydride, isophthalic acid, terephthalic acid, maleic anhydride, trimellitic anhydride, adipic acid, benzoic acid, rosin, and succinic acid. These can be used singly or two or more thereof.

The amount of the acid component used is not particularly limited, but is preferably 10% by mass or more, more preferably 20% by mass or more, and preferably 50% by mass or less, more preferably 40% by mass or less with respect to 100% by mass of the monomer component in synthesizing the alkyd resin.

Examples of the polyhydric alcohol component include: dihydric alcohols such as ethylene glycol, diethylene glycol, propylene glycol, 1,4-butanediol, neopentyl glycol, 3-methyl pentanediol, 1,4-hexanediol, and 1,6-hexanediol; glycerin; trimethylolethane; trimethylolpropane; and pentaerythritol. These can be used singly or two or more thereof.

The amount of the polyhydric alcohol component used is not particularly limited, but is preferably 5% by mass or more, more preferably 10% by mass or more, and preferably 50% by mass or less, more preferably 40% by mass or less with respect to 100% by mass of the monomer component in synthesizing the alkyd resin.

The weight average molecular weight (Mw) of the alkyd resin (b1) as measured by a GPC method relative to polystyrene standards is preferably 8,000 or more, more preferably 10,000 or more, and preferably 120,000 or less, more preferably 100,000 or less from the viewpoint of, for example, enabling to facilitate the formation of an anticorrosive coating film excellent in adhesion with an antifouling coating film having a high rosin content.

Specifically, the Mw can be measured by the method described in the following Examples.

The acid value of the alkyd resin (b1) varies in accordance with the number of carboxy groups contained in the resin, and hence is an index indicating how many carboxy groups are present in the resin (b1).

The acid value of the alkyd resin (b1) is preferably 0.5 mgKOH/g or more, more preferably 1 mgKOH/g or more, and preferably 10 mgKOH/g or less, more preferably 9 mgKOH/g or less from the viewpoint of, for example, enabling to facilitate the formation of an anticorrosive coating film that has a well-balanced excellence in both water resistance and adhesion with an antifouling coating film having a high rosin content.

Specifically, the acid value can be measured by the method described in the following Examples.

[Alkyd-modified acrylic resin (b2)]

The alkyd-modified acrylic resin (b2) is a resin having acrylic resin partially alkyd-modified (modified with an alkyd resin), and can be preferably synthesized using an alkyd resin (b2-1) and an unsaturated monomer containing a (meth)acrylic compound (b2-2).

Note that, in the present specification, the term "(meth) acrylic" means acrylic and/or methacrylic. Similar expressions (e.g., (meth)acrylate) have similar meanings. Note that, in the present specification, the (meth)acrylic resin is also simply referred to as an "acrylic resin". That is, the alkyd-modified acrylic resin (b2) is an alkyd-modified acrylic resin and/or an alkyd-modified methacrylic resin.

The alkyd-modified acrylic resin (b2) may be used singly or two or more kinds thereof.

The alkyd-modified acrylic resin (b2) is preferably synthesized specifically by a reaction at 80 to 150°C for about 3 to 10 hours of the alkyd resin (b2-1) added with a solvent, and a predetermined amount of an unsaturated monomer containing the (meth)acrylic compound (b2-2) and a polymerization initiator added thereto.

Examples of the alkyd resin (b2-1) include resins similar to the alkyd resin (b1).

The amount of the alkyd resin (b2-1) used is such an amount that the content (alkyd modification amount) of the structural unit derived from the alkyd resin (b2-1) is preferably 5% by mass or more, more preferably 10% by mass or more, and preferably 60% by mass or less, more preferably 50% by mass or less in 100% by mass of the alkyd-modified acrylic resin (b2) from the viewpoint of, for example, enabling to facilitate the formation of an anticorrosive coating film excellent in adhesion with an antifouling coating film having a high rosin content.

The unsaturated monomer is not particularly limited as long as a (meth)acrylic compound is used, and other unsaturated monomers may be used together with the (meth)acrylic compound.

Examples of the (meth)acrylic compound (b2-2) include: (meth)acrylic acid alkyl esters such as methyl (meth)acrylate, ethyl (meth)acrylate, n-, or iso-propyl (meth)acrylate, n-, iso-, or tert-butyl (meth)acrylate, hexyl (meth)acrylate, 2-ethylhexyl (meth)acrylate, n-octyl (meth)acrylate, n-nonyl (meth)acrylate, isononyl (meth)acrylate, tridecyl (meth)acrylate, lauryl (meth)acrylate, and stearyl (meth)acrylate; alicyclic, aromatic ring, heterocyclic or vinyl group-containing (meth)acrylic acid esters such as cyclohexyl (meth)acrylate, phenyl (meth)acrylate, benzyl (meth)acrylate, isobornyl (meth)acrylate, glycidyl (meth)acrylate, dicyclopentanyl (meth)acrylate, tetrahydrofurfuryl (meth)acrylate, and allyl (meth)acrylate; hydroxyl group-containing (meth)acrylic acid esters such as 2-hydroxyethyl (meth)acrylate, 2-hydroxypropyl (meth)acrylate, and 2-hydroxybutyl (meth)acrylate; adducts of 2-hydroxyethyl (meth)acrylate with ethylene oxide, propylene oxide, γ-butyrolactone or ε-caprolactone; (meth)acrylic acid esters having multiple hydroxyl groups such as glycerol (meth)acrylate; alkoxy group-containing (meth)acrylic acid esters such as 2-methoxyethyl (meth)acrylate, 2-ethoxyethyl (meth)acrylate, 3-methoxybutyl (meth)acrylate, m-, or p-methoxyphenyl (meth)acrylate, o-, m-, or p-methoxyphenylethyl (meth)acrylate, phenoxyethyl (meth)acrylate, and 2-dicyclopentenoxyethyl (meth)acrylate; monomers containing tertiary amino group and (meth)acryloyl group such as dimethylaminoethyl (meth)acrylate, diethylaminoethyl (meth)acrylate, dimethylaminopropyl (meth)acrylate, dimethylaminobutyl (meth)acrylate, dibutylaminoethyl (meth)acrylate, dimethylaminoethyl (meth)acrylamide, and dimethylaminopropyl (meth)acrylamide; monomers containing primary or secondary amino group and (meth)acryloyl group such as (meth)acrylamide and butylaminoethyl (meth)acrylate; and (meth)acrylic acid. Among them, it is preferable to contain at least one selected from methyl (meth)acrylate, n-, iso-, or tert-butyl (meth)acrylate, 2-hydroxyethyl (meth)acrylate, and (meth)acrylic acid.

The (meth)acrylic compound (b2-2) may be used singly or two or more kinds thereof.

Examples of the other unsaturated monomers include: nitrile group-containing monomers such as acrylonitrile and methacrylonitrile; heterocyclic basic monomers such as vinylpyrrolidone and vinylpyridine; vinyl monomers such as styrene, vinyltoluene, α-methylstyrene, vinyl acetate, and vinyl propionate; monomers of monobasic or dibasic acid such as crotonic acid, maleic acid, fumaric acid and itaconic acid; and monoesters of dibasic acid monomers such as monomethyl maleate, monoethyl maleate, monomethyl itaconate and monoethyl itaconate. These can be used singly or two or more thereof.

The amount of the (meth)acrylic compound (b2-2) used is preferably 10% by mass or more, more preferably 20% by mass or more, and preferably 100% by mass or less, more preferably 90% by mass or less with respect to 100% by mass of the unsaturated monomer from the viewpoint of, for example, enabling to facilitate the formation of an anticorrosive coating film excellent in adhesion with an antifouling coating film having a high rosin content.

With regard to the unsaturated monomer, methacrylic acid is preferably contained because of a tendency to have excellent pigment dispersibility and easily form an anticorrosive coating film having excellent adhesion with an antifouling coating film having a high rosin content.

When methacrylic acid is used as the unsaturated monomer, the content of the structural unit derived from methacrylic acid is preferably 0.5% by mass or more with respect to 100% by mass of the alkyd-modified acrylic resin (b2), and the upper limit thereof is preferably 10% by mass from the viewpoint of, for example, the anticorrosion property (such as water resistance) of the resulting anticorrosive coating film.

With regard to the unsaturated monomer, styrene is preferably contained from the viewpoint of, for example, enabling to facilitate the formation of an anticorrosive coating film that has a well-balanced excellence in both hardness and adhesion with an antifouling coating film having a high rosin content. When styrene is used as the unsaturated monomer, the content of the styrene-derived structural unit is preferably 10% by mass or more, more preferably 15% by mass or more, and preferably 60% by mass or less, more preferably 50% by mass or less with respect to 100% by mass of the alkyd-modified acrylic resin (b2).

The weight average molecular weight (Mw) of the alkyd-modified acrylic resin (b2) as measured by a GPC method relative to polystyrene standards is preferably 10,000 or more, more preferably 20,000 or more, and preferably 100,000 or less, more preferably 80,000 or less from the viewpoint of, for example, enabling to facilitate the formation of an anticorrosive coating film excellent in adhesion with an antifouling coating film having a high rosin content.

Specifically, the Mw can be measured by the method described in the following Examples.

The acid value of the alkyd-modified acrylic resin (b2) is preferably 0.5 mgKOH/g or more, more preferably 1 mgKOH/g or more, and preferably 10 mgKOH/g or less, more preferably 9 mgKOH/g or less from the viewpoint of, for example, enabling to facilitate the formation of an anticorrosive coating film that has a well-balanced excellence in both water resistance and adhesion with an antifouling coating film having a high rosin content.

Specifically, the acid value can be measured by the method described in the following Examples.

<Amine curing agent (C)>

The amine curing agent (C) is not particularly limited, and examples thereof include aliphatic amine curing agents, alicyclic amine curing agents, aromatic amine curing agents, aromatic aliphatic amine curing agents, and heterocyclic amine curing agents.

The amine curing agent (C) may be other amine curing agents besides these, and examples of the other amine curing agents include amines (amine compounds) described in JP S49-48480 B and polyether diamines.

The amine curing agent (C) may be used singly or two or more kinds thereof.

Examples of the aliphatic amine curing agent include an alkyl monoamine, an alkylene polyamine, a polyalkylene polyamine, a polyoxyalkylene polyamine, or an alkylaminoalkylamine.

Examples of the alkylene polyamine include compounds represented by the formula: "$H_2NR^1$-$NH_2$" ($R^1$ is a divalent hydrocarbon group having 1 to 12 carbon atoms), and specific examples thereof include methylenediamine, ethylenediamine, 1,2-diaminopropane, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, and trimethylhexamethylenediamine.

Examples of the polyalkylene polyamine include compounds represented by the formula: "$H_2N$-$(C_mH_{2m}NH)_nH$" (m is an integer from 1 to 10; n is from 2 to 10, preferably is an integer from 2 to 6), and specific examples thereof include diethylenetriamine, dipropylenetriamine, triethylenetetramine, tripropylenetetramine, tetraethylenepentamine, tetrapropylenepentamine, pentaethylenehexamine, nonaethylenedecamine, and bis(hexamethylene)triamine.

Examples of the aliphatic amine curing agent, other than these alkylene polyamines and polyalkylene polyamines, include: tetra(aminomethyl)methane, tetrakis(2-aminoethylaminomethyl)methane, 1,3-bis(2'-aminoethylamino)propane, 2,2'-[ethylenebis(iminotrimethyleneimino)]bis(ethanamine), tris(2-aminoethyl)amine, bis(cyanoethyl)diethylenetriamine, and diethylene glycol bis(3-aminopropyl)ether.

Examples of the alicyclic amine curing agent include: 1,3-bisaminomethylcyclohexane, 1,4-cyclohexanediamine, 4,4'-methylenebis(cyclohexanamine), 4,4'-isopropylidenebis(cyclohexanamine), norbornanediamine, bis(aminomethyl)cyclohexane, isophoronediamine, menthane diamine (MDA).

Examples of the aromatic amine curing agent include: aromatic polyamine compounds having two or more primary amino groups bonded to a benzene ring. More specifically, examples of the aromatic amine curing agent include: phenylenediamine, naphthalenediamine, diaminodiphenylmethane, 2,2-bis(4-aminophenyl)propane, 4,4'-diaminodiphenyl ether, 4,4'-diaminobenzophenone, 4,4'-diaminodiphenylsulfone, 2,2'-dimethyl-4,4'-diaminodiphenylmethane, 2,4'-diaminobiphenyl, 2,3'-dimethyl-4,4'-diaminobiphenyl, and 3,3'-dimethoxy-4,4'-diaminobiphenyl.

Examples of the aromatic aliphatic amine curing agent include: bis(aminoalkyl)benzene and bis(aminoalkyl)naphthalene. More specifically, examples of the aromatic aliphatic amine curing agent include: o-xylylenediamine, m-xylylenediamine (MXDA), p-xylylenediamine, bis(aminomethyl)naphthalene, and bis(aminoethyl)naphthalene.

Examples of the amine curing agent (C) further include: modified products of the amine curing agent described above, such as polyamidoamine, an amine adduct with an epoxy compound, a Mannich-modified product (e.g., Mannich-modified aliphatic polyamine, phenalkamine, phenalkamide), a Michael adduct, ketimine, aldimine, and a urethane modified product.

Such amine curing agent (C) is preferably one or more selected from polyamidoamine, an amine adduct of polyamidoamine with an epoxy compound, and a Mannich-modified product, and is more preferably polyamidoamine, from the viewpoint of, for example, enabling to facilitate the formation of an anticorrosive coating film excellent in adhesion with an antifouling coating film having a high rosin content.

In view of, for example, enabling to facilitate the formation of an anticorrosive coating film having a good interval adhesion in particular, a polyoxyalkylene polyamine is desirably contained.

The active hydrogen equivalent of the amine curing agent (C) is preferably 50 or more, more preferably 80 or more, and preferably 1,000 or less, more preferably 500 or less from the viewpoint of, for example, enabling to facilitate the formation of a coating film excellent in anticorrosion property.

With regard to the amine curing agent (C), a compound obtained by synthesis using a conventionally known method may be used, or a commercially available product may be used. Examples of the commercially available product include: an aliphatic polyamine "AD-71" (manufactured by OHTAKE-MEISHIN CHEMICAL, CO., LTD., active hydrogen equivalent: 290, solid content: 50% by mass); a polyamidoamine "PA-66S" (manufactured by OHTAKE-MEISHIN CHEMICAL, CO., LTD., active hydrogen equivalent: 377, solid content: 60% by mass) and "Ancamide 910" (manufactured by Air Products and Chemicals, Inc., active hydrogen equivalent: 230, solid content: 100% by mass); an epoxy adduct of polyamidoamine "PA-23" (manufactured by OHTAKE-MEISHIN CHEMICAL, CO., LTD., active hydrogen equivalent: 375, solid content: 60% by mass) and "PA-290(A)" (manufactured by OHTAKE-MEISHIN CHEMICAL, CO., LTD., active hydrogen equivalent: 277, solid content: 60% by mass); a Mannich-modified aromatic aliphatic polyamine "MAD-204(A)" (manufactured by OHTAKE-MEISHIN CHEMICAL, CO., LTD., active hydrogen equivalent: 202, solid content: 65% by mass); a Mannich-modified polyamide amine "ADEKA HARDENER EH-342W3" (manufactured by ADEKA Corporation, active hydrogen equivalent: 110, solid content: 80% by mass); a Mannich-modified aliphatic polyamine "Sunmide CX-1154" (manufactured by Sanwa Chemical Co., Ltd., active hydrogen equivalent: 255, solid content: 66% by mass); a phenalkamine adduct "Cardolite NX-5459" (manufactured by Cardolite Corporation, active hydrogen equivalent: 164, solid content: 70% by mass); a polyoxyalkylene polyamine "JEFFAMINE D-230" (manufactured by Huntsman Corporation, active hydrogen equivalent: 60, solid content: 100% by mass) and "JEFFAMINE T-403" (manufactured by Huntsman Corporation, active hydrogen equivalent: 80, solid content: 100% by mass).

From the viewpoint of, for example, enabling to facilitate the formation of an anticorrosive coating film excellent in anticorrosion property, coating film strength, and drying property, the content of the amine curing agent (C) in the present composition is desirably an amount with which the reaction ratio calculated from the following equation (2) is preferably 0.1 or more, more preferably 0.2 or more, and preferably 1.2 or less, more preferably 1.0 or less.

$$Reaction\ ratio = \{(the\ amount\ of\ solid\ content\ of$$

$$amine\ curing\ agent\ (C)/active\ hydrogen\ equivalent\ of\ solid$$

$$content\ of\ amine\ curing\ agent\ (C)) + (the\ amount\ of\ solid$$

$$content\ of\ component\ with\ reactivity\ to\ epoxy\ resin$$

$$(A)/functional\ group\ equivalent\ of\ solid\ content\ of\ component$$

$$with\ reactivity\ to\ epoxy\ resin\ (A))\}/\{(the\ amount\ of\ solid$$

$$content\ of\ epoxy\ resin\ (A)/epoxy\ equivalent\ of\ solid\ content$$

$$of\ epoxy\ resin\ (A)) + (the\ amount\ of\ solid\ content\ of$$

$$component\ with\ reactivity\ to\ amine\ curing\ agent$$

$$(C)/functional\ group\ equivalent\ of\ solid\ content\ of\ component$$

$$with\ reactivity\ to\ amine\ curing\ agent\ (C))\} \cdots (2)$$

Here, examples of the "component with reactivity to amine curing agent (C)" in the equation (2) include: a reactive diluent having an epoxy group, a silane coupling agent, and a (meth)acrylate monomer, described later, and examples of the "component with reactivity to epoxy resin (A)" include: a silane coupling agent described later. Note that, the "functional group equivalent" of each of the components means the mass (g) per one functional group in one mole of each of these components. With regard to the silane coupling agent, a silane coupling agent having an amino group or an epoxy group as a reactive group can be used, therefore the reaction ratio is necessary to be calculated by the determination based on the type of the reactive group whether the silane coupling agent has reactivity to the epoxy resin (A) or reactivity to the amine curing agent (C).

<Other components>

The present composition may contain, in addition to the above (A) to (C), other components such as a reactive diluent, a pigment, a curing accelerator, an adhesion promoter, a plasticizer, a solvent, an anti-sagging or anti-settling agent, a dehydrating agent (stabilizer), and other coating film-forming components (e.g, dispersing agent, antifoaming agent, leveling agent), if necessary, as long as the object of the present invention is not impaired.
The other components may be used singly or two or more kinds thereof.
The rosins abundantly contained in hydrolyzable antifouling coating materials are acids having a carboxy group. The acid components tend to be compatible with each other and an interaction such as hydrogen bond is presumed to act, therefore it is inferred that an anticorrosive coating composition that contains an acid component has an enhanced adhesion with an antifouling coating material that contains a large amount of rosins. Therefore, the addition of rosins also to the anticorrosive coating composition can be considered. However, in the case of using rosins in the coating composition, the rosins need to be dispersed, and this dispersion requires the use of a relatively large amount of solvent, consequently the rosins are found to be difficult to use in an anticorrosive coating composition that is required to have an enhanced solid content.
For this reason, the present composition may contain rosins, but in the case where the present composition contains rosins, the solid content in the contained amount thereof is typically 30 parts by mass or less, preferably 10 parts by mass or less, more preferably 4.5 parts by mass or less, and particularly preferably 2.5 parts by mass or less with respect to 100 parts by mass of the total solid content of the epoxy resin (A) and the alkyd resin (B) from the viewpoint of, for example, enabling to easily obtain a high solid composition, and being a high solid composition but also enabling to facilitate the formation of an anticorrosive coating film that is excellent in anticorrosion property and adhesion with an antifouling coating film having a high rosin content.

Note that, examples of the rosins include: the compounds similar to the rosins described in the section of the following antifouling coating composition.

[Reactive diluent]

The present composition may contain a reactive diluent.

The reactive diluent is preferably a reactive diluent containing an epoxy group. The epoxy group-containing reactive diluent is not particularly limited, and may be a monofunctional type or a polyfunctional type as long as it is an epoxy compound having a viscosity at 25°C of 500 mPa·s or less.

Examples of the monofunctional epoxy group-containing reactive diluent include: alkyl glycidyl ethers (with alkyl group having 1 to 13 carbon atoms), phenyl glycidyl ethers, o-cresyl glycidyl ethers, alkyl phenyl glycidyl ethers (with alkyl group having 1 to 20, preferably 1 to 5 carbon atoms, e.g., methyl phenyl glycidyl ether, ethyl phenyl glycidyl ether, propyl phenyl glycidyl ether, or p-tert-butyl phenyl glycidyl ether), phenol glycidyl ethers, alkylphenol glycidyl ethers, and phenol $(EO)_n$ glycidyl ethers (number of repetitions n = 3 to 20, EO:-$C_2H_4O$-).

Examples of the polyfunctional epoxy group-containing reactive diluent include: 1,4-butanediol diglycidyl ether, 1,6-hexanediol diglycidyl ether, neopentyl glycol diglycidyl ether, cyclohexane dimethanol diglycidyl ether, resorcinol diglycidyl ether, mono- or polyalkylene glycol diglycidyl ether (with alkylene group having 1 to 5 carbon atoms, e.g., ethylene glycol diglycidyl ether, dipropylene glycol diglycidyl ether, or polypropylene glycol diglycidyl ether), and trimethylolpropane triglycidyl ether.

When the present composition contains a reactive diluent, the contained amount of the solid content of the reactive diluent in the present composition is preferably 0.1% by mass or more, more preferably 0.5% by mass or more, and preferably 15% by mass or less, more preferably 10% by mass or less, still more preferably 8% by mass or less with respect to 100% by mass of the solid content of the present composition from the viewpoint of, for example, enabling to facilitate the formation of an anticorrosive coating film excellent in anticorrosion property.

[Pigment]

Examples of the pigment include: extender pigments, color pigments, and rust preventing pigments.

Specific examples of the extender pigments include: barium sulfate, potassium feldspar, silica, calcium carbonate, talc, mica, glass flakes, and aluminum stearate.

Specific examples of the color pigments include: titanium white (titanium oxide), red iron oxide, yellow iron oxide, and carbon black.

Examples of the rust preventing pigments include: an aluminum paste, zinc chromate, and zinc phosphate.

With regard to the pigment, flaky pigment such as mica and an aluminum paste may be added from the viewpoint of, for example, enabling to facilitate the formation of an anticorrosive coating film excellent in coating film properties and anticorrosion properties.

When the present composition contains an extender pigment, the content of the extender pigment in the present composition is preferably 0.1 to 80% by mass with respect to 100% by mass of the solid content of the present composition.

When the present composition contains a color pigment, the content of the color pigment in the present composition is preferably 0.1 to 50% by mass with respect to 100% by mass of the solid content of the present composition.

When the present composition contains a rust preventing pigment, the content of the rust preventing pigment in the present composition is preferably 0.1 to 50% by mass with respect to 100% by mass of the solid content of the present composition.

[Curing accelerator]

Examples of the curing accelerators include: tertiary amines and polymerizable (meth)acrylate monomers.

Specific examples of the tertiary amines include: triethanolamine, dialkylaminoethanol, triethylenediamine (1,4-diazabicyclo[2.2.2]octane), and 2,4,6-tris(dimethylaminomethyl)phenol; and examples of commercially available products include "Ancamine K-54" (manufactured by Evonik Industries AG, 2,4,6-tri(dimethylaminomethyl)phenol).

Examples of commercially available products of the polymerizable (meth)acrylate monomer include: "M-CURE 100" (monofunctional aromatic acrylate, functional group equivalent: 257 to 267), "M-CURE 200" (difunctional aromatic acrylate, functional group equivalent: 130 to 140), "M-CURE 201" (difunctional aliphatic acrylate, functional group equivalent: 95 to 105), "M-CURE 300" (trifunctional aliphatic acrylate, functional group equivalent: 112 to 122), and "M-CURE 400" (tetrafunctional aliphatic acrylate, functional group equivalent: 80 to 90) (all of which are manufactured by Sartomer Company, Inc.).

When the present composition contains a curing accelerator, the contained amount of the solid content of the curing accelerator in the present composition is preferably 0.1 to 5% by mass with respect to 100% by mass of the solid content of the present composition from the viewpoint of, for example, enabling to facilitate the formation of an anticorrosive coating film excellent in curability, flexibility, and adhesion with an antifouling coating film having a high rosin content.

[Adhesion promoter]

Examples of the adhesion promoters include: organic acids, chelating agents, and silane coupling agents; and among them, silane coupling agents are preferable from the viewpoint of, for example, enabling to easily obtain a composition excellent in storage stability.

The silane coupling agent is not particularly limited, and a conventionally known compound can be used, but is preferably a compound having at least two functional groups in the same molecule and capable of contributions such as enhancement of adhesion to a substrate, and/or lowering of the viscosity of the present composition, and for example, is more preferably a compound represented by the formula: "X-SiMe$_n$Y$_{3-n}$" [n represents 0 or 1, X represents a reactive group (e.g., an amino group, a vinyl group, an epoxy group, a mercapto group, a halogen group, a group in which some of hydrocarbon groups are substituted with these groups, or a group in which some groups in which some of hydrocarbon groups are substituted with an ether bond, for example, are substituted with these groups) which are capable of reacting with an organic substance, Me represents a methyl group, and Y represents a hydrolyzable group (e.g., alkoxy groups such as methoxy group and ethoxy group)].

With regard to specific examples of such a silane coupling agent, a compound having an epoxy group or an amino group as a reactive group is preferable, and a compound having an epoxy group is more preferable, when it comes to commercially available products, there can be mentioned, for example, "KBM-403" ($\gamma$-glycidoxypropyltrimethoxysilane, manufactured by Shin-Etsu Chemical Co., Ltd.) and "Sila-Ace S-510" (manufactured by JNC Corporation).

When the present composition contains an adhesion promoter, the contained amount of the solid content of the adhesion promoter in the present composition is preferably 0.1% by mass or more, more preferably 0.3% by mass or more, and preferably 10% by mass or less, more preferably 7% by mass or less with respect to 100% by mass of the solid content of the present composition.

When the content of the adhesion promoter is within the range cited above, the performance of anticorrosive coating film such as adhesion to the substrate is improved, and the viscosity of the present composition can be lowered, so that coating application workability is improved.

[Anti-sagging or anti-settling agent]

With regard to the anti-sagging or anti-settling agent (thixotropic agent), conventionally known ones such as: organic clay waxes, for example, stearate salts, lecithin salts, and alkyl sulfonate salts of Al, Ca, or Zn; organic waxes, for example, polyethylene waxes, oxidized polyethylene waxes, amide waxes, polyamide waxes, and hydrogenated castor oil waxes; and synthetic fine powder silica, for example, can be used, and among them, amide waxes, synthetic fine powder silica, oxidized polyethylene waxes, and organic clay waxes are preferable.

Examples of such anti-sagging or anti-settling agents include: "DISPARLON 305", "A630-20X", "DISPARLON 6900-20X", "DISPARLON 4200-20", and "DISPARLON 6650" manufactured by Kusumoto Chemicals, Ltd., "A-S-A D-120", "A-S-A T-250F", and "A-S-A T-55-20BX" manufactured by Itoh Oil Chemicals, Co., Ltd.

When the present composition contains an anti-sagging or anti-settling agent, the content of the anti-sagging or anti-settling agent in the present composition is preferably 0.1 to 30% by mass with respect to 100% by mass of the solid content of the present composition.

[Antifoaming agent]

The present composition preferably contains an antifoaming agent from the viewpoint of, for example, suppressing the generation of bubbles and improving the appearance of the resulting anticorrosive coating film.

With regard to the antifoaming agents, for example, various conventionally known antifoaming agents such as a polymer antifoaming agent, an acrylic antifoaming agent, a silicone antifoaming agent, a mineral oil antifoaming agent, and an olefin antifoaming agent can be used, and among them, a polymer antifoaming agent and an olefin antifoaming agent are preferable.

Examples of such antifoaming agents include "BYK-1788", "BYK-1790", and "BYK-1794" manufactured by BYK Japan KK.; "AFCONA-2290" manufactured by AFCONA Additives; "SpectraSyn 40", "SpectraSyn Elite 150", "SpectraSyn Elite 65" manufactured by ExxonMobil Chemical Company.

When the present composition contains an antifoaming agent, the content of the antifoaming agent in the present composition is preferably 0.01% by mass or more, more preferably 0.05% by mass or more, and preferably 4% by mass or less, more preferably 2% by mass or less with respect to 100% by mass of the solid content of the present composition.

[Solvent]

Examples of the solvents include: xylene, toluene, methyl isobutyl ketone, methoxypropanol, methyl ethyl ketone, butyl acetate, n-butanol, isobutanol, isopropyl alcohol, propylene glycol monomethyl ether acetate, and benzyl alcohol.

When the present composition contains a solvent, the content of the solvent in the present composition is preferably such an amount with which the volume ratio of the solid content of the present composition falls within the range cited above.

<<Anticorrosive coating film>>

The anticorrosive coating film (hereinafter, also referred to as the "present anticorrosive coating film") according to an embodiment of the present invention is not particularly limited as long as it is a coating film formed from the present composition.

The present anticorrosive coating film is preferably formed by a method in which the present composition is applied on a substrate and then the applied present composition is dried, preferably the applied present composition is dried and cured. This method can also be referred to as a method to prevent corrosion of the substrate.

The substrate is preferably a substrate for which anticorrosion property and antifouling property in water are required, and examples thereof include various substrates that come into contact with sea water or fresh water, such as: underwater structures such as feed-water inlets/discharge outlets of thermal power plants or nuclear power plants; coastal roads; undersea tunnels; harbor facilities; canals; sludge diffusion prevention membranes for various marine civil engineering such as waterways; ships (e.g., ship bottom); fishing gear (e.g., floats, buoys).

Examples of the substrate materials include: ferrous metals (e.g., iron, steel, ferroalloy, carbon steel, alloy steel), nonferrous metals (e.g., zinc, aluminum, stainless steel), FRP, and vinyl chloride.

With regard to the substrate, the surface of the substrate may be subjected to a treatment (e.g., abrasive blast-cleaning (ISO 8501-1 Sa2 1/2), power tool cleaning, friction process, degreasing process to remove oil content and dust) as needed in order to remove rust, oil and fat, moisture, dust, slime, salt, for example, and to improve the adhesion of an anticorrosive coating film to be obtained; or a conventionally known primary anticorrosive coating material (shop primer), or another primer (epoxy resin anticorrosive coating material), for example, may be applied to the surface of the substrate and then dried as necessary, in view of, for example, the anticorrosion property, weldability, or shear resistance of the substrate. Alternatively, for the purpose of repair coating application, a substrate with a deteriorated antifouling coating film may be used as the substrate.

Among them, the present composition is preferably applied on a substrate on which a shop primer coating film is formed, or on a substrate on which a shop primer coating film and other primer coating films are formed in this order from the substrate side.

The method of applying the present composition on a substrate is not particularly limited, and conventionally known methods can be used without limitation, but spray coating application is preferable from the viewpoint of excellence in workability and productivity, for example, and of easy coating application also on a large area substrate.

The conditions for the spray coating application needs to be appropriately adjusted in accordance with the thickness of the anticorrosive coating film intended to form, and the coating application conditions at the time of airless spraying can be set to, for example, a primary (air) pressure of about 0.4 to 0.8 MPa, a secondary (coating material) pressure of about 10 to 26 MPa, and a gun moving speed of about 50 to 120 cm/sec.

The film thickness of the anticorrosive coating film needs to be appropriately selected according to an intended use, but is preferably 50 um or more, more preferably 100 um or more, and preferably 1000 um or less, more preferably 800 um or less from the viewpoint of making an anticorrosive coating film excellent in anticorrosion property.

When forming an anticorrosive coating film having such film thickness, a coating film having an intended film thickness may be formed by a single coating application (one coating application), or a coating film having an intended film thickness may be formed by a double or more coating applications (two or more coating applications). From the viewpoint of, for example, enabling to form with a good workability an anticorrosive coating film excellent in anticorrosion property, an anticorrosive coating film having a thickness in the range cited above is preferably formed by two coating applications.

The term "double coating applications (two coating applications)" refers to a method including a step in which the present composition is applied, dried and cured, and then on the resultant coating film, the present composition is applied, dried and cured.

The method of drying and curing the present composition is not particularly limited, and the present composition may be dried and cured by heating at about 5 to 60°C in order to shorten the drying and curing time, but is usually dried and cured by being left for about 1 to 14 days at room temperature under atmospheric conditions.

**EP 4 190 865 A1**

<<Laminated antifouling coating film and Antifouling substrate>>

The laminated antifouling coating film and the antifouling substrate according to an embodiment of the present invention are not particularly limited as long as they include the present anticorrosive coating film and the antifouling coating film in this order, but the present anticorrosive coating film and the antifouling coating film preferably are in contact with each other from the viewpoint of more eliciting the effect of the present invention.

The laminated antifouling coating film is preferably formed by a method in which an antifouling coating composition is applied on the present anticorrosive coating film formed on a substrate, and then the applied antifouling coating composition is dried, preferably the applied antifouling coating composition is dried and cured. This method can also be said to a manufacturing method of an antifouling substrate, or an antifouling method of a substrate.

The laminated antifouling coating film is excellent in the property (antifouling property, particularly static antifouling property) to prevent aquatic organisms such as sea lettuces, barnacles, green laver, serpulas, oysters, and bugula from adhering to the substrate over an extended period of time.

Examples of the present anticorrosive coating film in the laminated antifouling coating film include: a coating film similar to the present anticorrosive coating film in the section of the above-mentioned anticorrosive coating film, and the method of forming the present anticorrosive coating film is also similar to that as described above.

Examples of the method of applying the antifouling coating composition and the method of drying and curing the composition include: methods similar to the method of applying the present composition and the method of drying and curing the composition described above.

The film thickness (dried film thickness) of the antifouling coating film is not particularly limited, but is, for example, about 50 to 2,000 um in a case where the substrate is a ship or an underwater structure.

<Antifouling coating composition>

With regard to the antifouling coating composition, a conventionally known antifouling coating composition can be used, but a hydrolyzable antifouling coating composition is preferable from the viewpoint of more eliciting the effect of the present invention.

The hydrolyzable antifouling coating composition is not particularly limited as long as it contains a hydrolyzable resin, and may further contain additives such as other binder resins, rosins, monocarboxylic acid compounds, copper or copper compounds, organic antifouling agents, pigments, dehydrating agents, plasticizers, pigment dispersing agents, anti-sagging or anti-settling agents, and solvents, as necessary.

The hydrolyzable antifouling coating composition usually contains copper or a copper compound and/or an organic antifouling agent, and preferably contains rosins from the viewpoint of, for example, enabling to promote the elution of these antifouling agents, enabling to enhance the consumption persistence of the antifouling coating film, and further eliciting the effect of the present invention.

[Hydrolyzable resin]

The hydrolyzable resin is not particularly limited, and a conventionally known hydrolyzable resin can be used, but from the viewpoint of, for example, enabling to facilitate the formation of an antifouling coating film excellent in long-term antifouling properties and long-term coating film properties, preferred examples thereof include,

a metal salt-containing copolymer which is an acrylic resin or a polyester resin and has a side chain terminal group represented by the following Formula (I),
a metal salt-containing copolymer containing: a constituent unit derived from a monomer represented by the following Formula (II); and a constituent unit derived from another unsaturated monomer copolymerizable with the monomer, and
a silyl ester-containing copolymer containing: a constituent unit derived from at least one type of monomer represented by the following Formula (III); and a constituent unit derived from another unsaturated monomer copolymerizable with the monomer.

One kind, or two or more kinds of the hydrolyzable resins can be contained in the antifouling coating composition.

$$COO\text{-}M\text{-}O\text{-}COR^1 \cdots \qquad (I)$$

[In Formula (I), M represents zinc or copper, and $R^1$ represents an organic group.]

$$CH_2=C(R^2)\text{-}COO\text{-}M\text{-}O\text{-}CO\text{-}C(R^2)=CH_2 \cdots \qquad (II)$$

[In Formula (II), M represents zinc or copper, and $R^2$ independently represents a hydrogen atom or a methyl group.]

$$R^3\text{-CH=C}(R^4)\text{-COO-Si}R^5R^6R^7 \cdots \qquad \text{(III)}$$

[In Formula (III), $R^4$ represents a hydrogen atom or a methyl group, $R^5$, $R^6$ and $R^7$ each independently represent a monovalent organic group which has 1 to 20 carbon atoms and may have a hetero atom, and $R^3$ represents a hydrogen atom or $R^8$-O-CO- (where $R^8$ represents a monovalent organic group which has 1 to 20 carbon atoms and may have a hetero atom, or represents a silyl group represented by $SiR^9R^{10}R^{12}$, and $R^9$, $R^{10}$ and $R^{11}$ each independently represent a monovalent organic group which has 1 to 20 carbon atoms and may have a hetero atom.).]

Examples of the other unsaturated monomer copolymerizable with the monomer represented by Formula (II) or Formula (III) include: (meth)acrylic acid esters, monocarboxylic acids, dicarboxylic acids, half esters (monoesters) or diesters thereof, vinyl esters, and styrenes.

Examples of the unsaturated monomer include:

(meth)acrylic acid esters such as (meth)acrylic acid methyl ester, (meth)acrylic acid ethyl ester, (meth)acrylic acid butyl ester, (meth)acrylic acid 2-ethylhexyl ester, (meth)acrylic acid lauryl ester, (meth)acrylic acid tridecyl ester, (meth)acrylic acid stearyl ester, (meth)acrylic acid allyl ester, (meth)acrylic acid cyclohexyl ester, (meth)acrylic acid benzyl ester, (meth)acrylic acid isobornyl ester, (meth)acrylic acid methoxyalkyl ester, (meth)acrylic acid ethoxyalkyl ester, (meth)acrylic acid glycidyl ester, (meth)acrylic acid tetrahydrofurfuryl ester, (meth)acrylic acid hydroxyethyl ester, (meth)acrylic acid hydroxypropyl ester, and (meth)acrylic acid hydroxybutyl ester; monocarboxylic acids such as (meth)acrylic acid; dicarboxylic acids such as itaconic acid, maleic acid, and succinic acid, or half esters (monoesters) and diesters thereof; styrenes such as styrene and α-methylstyrene; vinyl esters such as vinyl acetate and vinyl propionate. These may be used singly or two or more kinds thereof.

The contained amount of the solid content of the hydrolyzable resin in the antifouling coating composition is preferably 3% by mass or more, more preferably 5% by mass or more, and preferably 50% by mass or less, more preferably 30% by mass or less with respect to 100% by mass of the solid content of the composition from the viewpoint of, for example, enabling to facilitate the formation of an antifouling coating film excellent in coating film properties.

[Other binder resins]

The antifouling coating composition may contain a binder resin other than the hydrolyzable resin as a resin for forming a coating film.

One kind, or two or more kinds of the other binder resins can be contained in the antifouling coating composition.

With regard to such resins, there can be used, for example, non-water-soluble or poorly water-soluble resins such as an acrylic resin not containing a metal ester group, an acrylic silicone resin, a polyester resin not containing a metal ester group, an unsaturated polyester resin, a fluororesin, a polybutene resin, a silicone rubber, a polyurethane resin, an epoxy resin, a polyamide resin, a vinyl resin (such as vinyl chloride copolymer, and ethylenevinyl acetate copolymer), a chlorinated rubber, a chlorinated olefin resin, a styrene-butadiene copolymer resin, a ketone resin, an alkyd resin, a coumarone resin, a terpene phenol resin, and a petroleum resin, and a water-soluble resin such as pine tar.

When the antifouling coating composition contains other binder resin, the contained amount of the solid content of the other binder resin is preferably 0.05% by mass or more and 10% by mass or less, and more preferably 0.1% by mass or more and 5% by mass or less with respect to 100% by mass of the solid content of the antifouling coating composition.

[Rosins]

Examples of the rosins include: rosins such as gum rosin, wood rosin, and tall rosin; rosin derivatives such as hydrogenated rosin and disproportionated rosin; and esters and metal salts thereof. Rosin is a residue remaining after the distillation of pine resin which is the sap of a plant in a family of Pinaceae, and is a natural resin containing rosin acids (such as abietic acid, palustric acid, and isopimaric acid) as a main component.

One kind, or two or more kinds of the rosins can be contained in the antifouling coating composition.

When the antifouling coating composition contains rosins, with respect to the content of the rosins in the composition, a content mass ratio $(W_A/W_B)$ of the content mass $(W_A)$ of the resin for forming a coating film to the content mass $(W_B)$ of the rosins is preferably 99.9/0.1 to 30/70, more preferably 95/5 to 35/65, and still more preferably 90/10 to 40/60.

When the content mass ratio is within such a range, there is an effect of further enhancing the polishing property (coating film consumption performance) at the antifouling coating film, and antifouling property (particularly, static antifouling property) can be further improved.

According to an embodiment of the present invention, an anticorrosive coating film excellent in adhesion with an antifouling coating film having a high rosin content can be formed, therefore, from the viewpoint of, for example, more eliciting the effect of the present invention, it is preferable to use an antifouling coating composition containing a large amount of rosins, however, it should be noted that an antifouling coating composition containing a small amount of rosins can also be used as a matter of course. That is, according to an embodiment of the present invention, it is possible to use an antifouling coating composition having a wide range of rosins content within the range cited above (ranging from a relatively low content to a high content in the rosins content).

Note that examples of the resin for forming a coating film include the hydrolyzable resin and other binder resins.

In ships having long anchorages or ships operating along routes under severe fouling conditions, coating materials particularly containing a large amount of rosins (a coating material typically containing rosins with $W_A/W_B$ of more than 75/25, a coating material preferably containing rosins with $W_A/W_B$ of 70/30 to 30/70) are preferably used in order to improve static antifouling property and long-term antifouling property; however, in a case where such antifouling coating material is applied on a conventional anticorrosive coating film, the formed antifouling coating film tends to have poor adhesion to the conventional anticorrosive coating material. However, the laminated antifouling coating film according to an embodiment of the present invention contains the present anticorrosive coating film having good adhesion with such antifouling coating material, so that a laminated antifouling coating film having excellent adhesion can be easily formed even with use of an antifouling coating composition having a rosin content in the range cited above (having a high rosin content).

[Monocarboxylic acid compound]

Examples of the monocarboxylic acid compounds include: aliphatic or alicyclic monocarboxylic acids, monocarboxylic acid derivatives thereof, and metal salts thereof. Specific examples of the monocarboxylic acid compounds include:
naphthenic acid, cycloalkenyl carboxylic acid, bicycloalkenyl carboxylic acid, versatic acid, trimethyl isobutenyl cyclohexene carboxylic acid, stearic acid, hydroxystearic acid, salicylic acid, and metal salts thereof.

One kind, or two or more kinds of the monocarboxylic acid compounds can be contained in the antifouling coating composition.

[Copper or copper compound]

The copper or copper compound (with the exception of copper pyrithione) may be any of organic or inorganic copper compound, and examples thereof include powdery copper (copper powder), cuprous oxide, cuprous thiocyanate, and cupronickel.

One kind, or two or more kinds of the copper or copper compounds can be contained in the antifouling coating composition.

When the antifouling coating composition contains copper or a copper compound, the content of copper and the copper compound in the composition is preferably 0.1% by mass or more, more preferably 0.5% by mass or more, and preferably 90% by mass or less, more preferably 80% by mass or less with respect to 100% by mass of the solid content of the composition from the viewpoint of, for example, enabling to facilitate the formation of an antifouling coating film excellent in long-term antifouling property.

[Organic antifouling agent]

Examples of the organic antifouling agents include: metal pyrithione such as copper pyrithione and zinc pyrithione; 4,5-dichloro-2-n-octyl-4-isothiazoline-3-one; 4-bromo-2-(4-chlorophenyl)-5-(trifluoromethyl)-1H-pyrrole-3-carbonitrile (aka: tralopyril); pyridine triphenylborane; 4-isopropyl pyridine diphenylmethylborane; N,N-dimethyl-N'-(3,4-dichlorophenyl)urea; N-(2,4,6-trichlorophenyl)maleimide; 2,4,5,6-tetrachloroisophthalonitrile; 2-methylthio-4-tert-butylamino-6-cyclopropylamino-1,3,5-triazine; (+/-)-4-[1-(2,3-dimethylphenyl)ethyl]-1H-imidazole (aka: medetomidine); bisdimethyldithiocarbamoyl zinc ethylenbisdithiocarbamate; chloromethyl-n-octyl disulfide; N',N-dimethyl-N-phenyl-(N-fluorodichloromethylthio)sulfamide; tetraalkylthiuram disulfide; zinc dimethyldithiocarbamate; zinc ethylenbisdithiocarbamate; 2,3-dichloro-N-(2',6'-diethylphenyl)maleimide; and 2,3-dichloro-N-(2'-ethyl-6'-methylphenyl)maleimide.

One kind, or two or more kinds of the organic antifouling agents can be contained in the antifouling coating composition.

When the antifouling coating composition contains an organic antifouling agent, the content of the organic antifouling agent in the composition is preferably 0.1% by mass or more, more preferably 0.5% by mass or more, and preferably 90% by mass or less, more preferably 80% by mass or less with respect to 100% by mass of the solid content of the composition from the viewpoint of, for example, enabling to facilitate the formation of an antifouling coating film excellent in long-term antifouling property and water resistance retention (mechanical property retention).

[Pigment]

The antifouling coating composition may contain a pigment for the purpose of the coloring of antifouling coating film and the hiding of base, or for the purpose of appropriately adjusting the strength of the antifouling coating film.

Examples of the pigments include: extender pigments such as talc, mica, clay, potassium feldspar, zinc oxide, calcium carbonate, kaolin, alumina white, white carbon, aluminum hydroxide, magnesium carbonate, barium carbonate, barium sulfate, calcium sulfate, and zinc sulfide; and color pigments such as red iron oxide, titanium white (titanium oxide), yellow iron oxide, carbon black, naphthol red, and phthalocyanine blue. Among them, talc and zinc oxide are preferable. Note that calcium carbonate and white carbon are also used as anti-settling agents described later.

One kind, or two or more kinds of the pigments can be contained in the antifouling coating composition.

When the antifouling coating composition contains a pigment, the preferred amount of the pigment contained in the composition is set based on an intended viscosity according to, for example, the coating application form of the composition, but the content of the pigment in the composition is preferably 0.01% by mass or more, more preferably 0.1% by mass or more, and preferably 80% by mass or less, more preferably 70% by mass or less with respect to 100% by mass of the solid content of the composition.

[Dehydrating agent]

With regard to the dehydrating agent, conventionally known dehydrating agents such as synthetic zeolite, anhydrous gypsum, hemihydrate gypsum, orthoformic acid alkyl esters, and tetraethoxysilane can be used.

One kind, or two or more kinds of the dehydrating agents can be contained in the antifouling coating composition.

When the antifouling coating composition contains a dehydrating agent, the content of the dehydrating agent in the composition is preferably 0.01% by mass or more, more preferably 0.1% by mass or more, and preferably 30% by mass or less, more preferably 20% by mass or less with respect to 100% by mass of the solid content of the composition from the viewpoint of, for example, enabling to suppress an increase in viscosity of the antifouling coating composition during storage.

[Plasticizer]

Examples of the plasticizers include paraffin chloride (chlorinated paraffin), TCP (tricresyl phosphate), polyvinyl ethyl ether, and dialkyl phthalate, and among them, paraffin chloride (chlorinated paraffin) and polyvinyl ethyl ether are preferable from the viewpoint of, for example, enabling to facilitate the formation of an antifouling coating film excellent in coating film water resistance (mechanical properties) and coating film hydrolyzability (consumption performance).

One kind, or two or more kinds of the plasticizer can be contained in the antifouling coating composition.

When the antifouling coating composition contains a plasticizer, the content of the plasticizer in the composition is preferably 0.1% by mass or more, more preferably 0.5% by mass or more, and preferably 30% by mass or less, more preferably 20% by mass or less with respect to 100% by mass of the solid content of the composition from the viewpoint of, for example, enabling to facilitate the formation of an antifouling coating film excellent in antifouling properties, coating film water resistance (mechanical properties), coating film hydrolyzability (consumption performance).

[Pigment dispersing agent]

Examples of the pigment dispersing agents include various known organic or inorganic pigment dispersants, and examples thereof include aliphatic amines and organic acids (e.g., "LEOMIX TDO" (manufactured by Lion Specialty Chemicals Co., Ltd.) and "Disperbyk-101" (manufactured by BYK Japan KK)).

One kind, or two or more kinds of the pigment dispersing agents can be contained in the antifouling coating composition.

When the antifouling coating composition contains a pigment dispersing agent, the content of the pigment dispersant in the composition is preferably 0.01% by mass or more, more preferably 0.1% by mass or more, and preferably 20% by mass or less, more preferably 10% by mass or less with respect to 100% by mass of the solid content of the composition from the viewpoint of, for example, enabling to facilitate the formation of a composition excellent in an effect of reducing the viscosity of coating material, and an anti-flooding effect, for example.

[Anti-sagging or anti-settling agent]

The antifouling coating composition may contain an anti-sagging or anti-settling agent (thixotropic agent) for the purpose of adjusting the viscosity of the composition.

One kind, or two or more kinds of the anti-sagging or anti-settling agents can be contained in the antifouling coating composition, and an anti-sagging or anti-settling agent similar to the anti-sagging or anti-settling agent exemplified in the section of the above-mentioned anticorrosive coating material can be used.

When the antifouling coating composition contains an anti-sagging or anti-settling agent, the content of the anti-sagging or anti-settling agent in the composition is preferably 0.1% by mass or more, more preferably 0.3% by mass or more, and preferably 50% by mass or less, more preferably 30% by mass or less with respect to 100% by mass of the solid content of the composition from the viewpoint of, for example, easily obtaining a composition excellent in storage stability and the overcoatability of the same type/different types of coating materials.

[Solvent]

The antifouling coating composition may contain a solvent such as water or an organic solvent as necessary in order to improve dispersibility or to adjust the viscosity of the composition. From the viewpoint of, for example, further enhancing the adhesion to the present anticorrosive coating film, the solvent is preferably an organic solvent, specifically an organic solvent capable of softening the present anticorrosive coating film in the vicinity of the surface thereof.

One kind, or two or more kinds of the solvents can be contained in the antifouling coating composition.

Examples of the organic solvents include: aromatic organic solvents such as xylene, toluene, and ethylbenzene; ketones such as methyl ethyl ketone, methyl isobutyl ketone, and cyclohexanone; aliphatic (e.g., having about 1 to 10, preferably about 2 to 5 carbon atoms) monohydric alcohols such as ethanol, isopropyl alcohol, n-butanol, and isobutanol; and ester solvents such as ethyl acetate and butyl acetate.

When the antifouling coating composition contains a solvent, the content of the solvent in the composition is usually 5% by mass or more, preferably 10% by mass or more, and usually 80% by mass or less, preferably 70% by mass or less, with respect to 100% by mass of the composition.

Examples

Hereinafter, the present invention will be more specifically described based on Examples, but the present invention is not limited to these Examples.

<Measurement of weight average molecular weights (Mw)>

The weight average molecular weight (Mw) was measured by GPC method with an apparatus (manufactured by Tosoh Corporation, HLC-8220GPC), a column (SuperH2000 + SuperH4000 (manufactured by Tosoh Corporation, inner diameter: 6 mm/each length: 15 cm)), under the conditions of a column temperature (40°C), an eluent (tetrahydrofuran), a flow rate (0.50 mL/min.), a detector (RI), and a standard substance (polystyrene).

<Measurement of non-volatile contents>

The resin solution prepared in the following Production Example was dried in a hot air dryer at 108°C for 3 hours and then the heating residue was measured, and the non-volatile content in the resin solution was calculated from the following equation.

$$\text{Non-volatile content (\% by mass)} = (\text{the mass of the heating residue/the mass of the resin solution before heating}) \times 100 \text{ (\%)}$$

<Measurement of acid values>

In a conical beaker was accurately weighed 1 to 5 g of a resin, 30 to 50 ml of a liquid mixture of toluene/ethanol = 7/3 (volume ratio) was added thereto to dissolve the resin, two drops of a phenolphthalein-ethanol solution was added as an indicator, followed by a titration with an N/10 potassium hydroxide-ethanol solution. The time when the redness of the liquid would not turn colorless for 30 seconds was regarded as the end point of the titration, and the acid value was calculated by the following equation.

$$\mathrm{Acid\ value\ =\ (B\ \times\ f\ \times\ 5.61)/S}$$

[B: the amount of the potassium hydroxide-ethanol solution consumed (ml), f: the factor of the potassium hydroxide-ethanol solution, S: the mass of the resin (g)]

[Production Example 1] Preparation of alkyd resin solution 1

Into a reactor were fed 41.50 parts by mass of soybean oil fatty acid, 30.80 parts by mass of phthalic anhydride, 10.90 parts by mass of glycerin, 13.20 parts by mass of pentaerythritol, 3.60 parts by mass of benzoic acid, and 5.00 parts by mass of xylene as a reflux solvent. The resultant liquid mixture was heated to 220°C under a nitrogen stream, kept warm for 3 hours, and then cooled, followed by addition of 71.10 parts by mass of xylene to prepare an alkyd resin solution 1. The Mw of the alkyd resin in the alkyd resin solution 1 was 16,000. The non-volatile content of the alkyd resin solution 1 was 55.0% by mass, and the acid value of the alkyd resin in the solution 1 was 7.3 mgKOH/g.

[Production Example 2] Preparation of alkyd resin solution 2

Into a reactor were fed 57.50 parts by mass of No. 2 soybean oil, 0.03 parts by mass of lithium naphthenate, and 4.80 parts by mass of glycerin, then the resultant liquid mixture was heated to 150°C under a nitrogen stream, and 9.80 parts by mass of pentaerythritol was added thereto. The mixture was heated to 260°C, held at this temperature for 4 hours, and then lowered to 200°C. Thereafter, 27.50 parts by mass of phthalic anhydride, 0.40 parts by mass of maleic anhydride, and 4.83 parts by mass of xylene as a refluxing solvent were added thereto. Subsequently, the mixture was heated to 220°C, kept warm for 5 hours, and then cooled, followed by addition of 59.55 parts by mass of turpentine to prepare an alkyd resin solution 2. The Mw of the alkyd resin in the alkyd resin solution 2 was 64,000. The non-volatile content of the alkyd resin solution 2 was 60.0% by mass, and the acid value of the alkyd resin in the solution 2 was 7.0 mgKOH/g.

[Production Example 3] Preparation of alkyd-modified acrylic resin solution 1

Into a reactor, 18.18 parts by mass of the alkyd resin solution 1 obtained in Production Example 1 (10 parts by mass of the alkyd resin in the solution) and 41.82 parts by mass of xylene as a solvent were fed to obtain a liquid mixture. The liquid mixture was heated to 125°C under a nitrogen stream, and then a liquid mixture in which 90 parts by mass of a liquid mixture of monomer components (styrene: 36.0 parts by mass, methyl methacrylate (MMA): 17.5 parts by mass, n-butyl acrylate (BA): 35.5 parts by mass, and methacrylic acid (MAA): 1.0 parts by mass), 1.50 parts by mass of an initiator (t-butyl peroxybenzoate), and 16.67 parts by mass of xylene were included was dropwise added thereto over 3 hours, while maintaining the temperature at 125°C. After the dropwise addition, the mixture was kept at the same temperature (125°C) for 1 hour, and then 0.3 parts by mass of t-butyl peroxybenzoate was added thereto. The mixture was kept warm for 2 hours and then cooled, and 35.13 parts by mass of xylene was added thereto in such a way that the non-volatile content was 50% by mass thereby preparing an alkyd-modified acrylic resin solution 1.
The acid value of the alkyd-modified acrylic resin in the prepared solution 1 was 4.4 mgKOH/g.

[Production Example 4] Preparation of alkyd-modified acrylic resin solution 2

Into a reactor, 36.36 parts by mass of the alkyd resin solution 1 obtained in Production Example 1 (20 parts by mass of the alkyd resin in the solution) and 33.64 parts by mass of xylene as a solvent were fed to obtain a liquid mixture. The liquid mixture was heated to 125°C under a nitrogen stream, and then a liquid mixture in which 80 parts by mass of a liquid mixture of monomer components (styrene: 36.0 parts by mass, methyl methacrylate (MMA): 11.5 parts by mass, n-butyl acrylate (BA): 31.5 parts by mass, and methacrylic acid (MAA): 1.0 parts by mass), 1.50 parts by mass of an initiator (t-butyl peroxybenzoate), and 16.67 parts by mass of xylene were included was dropwise added thereto over 3 hours, while maintaining the temperature at 125°C. After the dropwise addition, the mixture was kept at the same temperature (125°C) for 1 hour, and then 0.3 parts by mass of t-butyl peroxybenzoate was added thereto. The mixture was kept warm for 2 hours and then cooled, and 35.13 parts by mass of xylene was added in such a way that the non-volatile content was 50% by mass thereby preparing an alkyd-modified acrylic resin solution 2.
The acid value of the alkyd-modified acrylic resin in the prepared solution 2 was 5.1 mgKOH/g.

[Production Example 5] Preparation of alkyd-modified acrylic resin solution 3

Into a reactor, 54.54 parts by mass of the alkyd resin solution 1 obtained in Production Example 1 (30 parts by mass of the alkyd resin in the solution) and 25.46 parts by mass of xylene as a solvent were fed to obtain a liquid mixture. The liquid mixture was heated to 125°C under a nitrogen stream, and then a liquid mixture in which 70 parts by mass of a liquid mixture of monomer components (styrene: 31.0 parts by mass, methyl methacrylate (MMA): 10.5 parts by mass, n-butyl acrylate (BA): 27.5 parts by mass, and methacrylic acid (MAA): 1.0 parts by mass), 1.40 parts by mass of an initiator (t-butyl peroxybenzoate), and 16.67 parts by mass of xylene were included was dropwise added thereto over 3 hours, while maintaining the temperature at 125°C. After the dropwise addition, the mixture was kept at the same temperature (125°C) for 1 hour, and then 0.3 parts by mass of t-butyl peroxybenzoate was added thereto. The mixture was kept warm for 2 hours and then cooled, and 35.04 parts by mass of xylene was added thereto in such a way that the non-volatile content was 50% by mass thereby preparing an alkyd-modified acrylic resin solution 3.
The acid value of the alkyd-modified acrylic resin in the prepared solution 3 was 6.1 mgKOH/g.

[Production Example 6] Preparation of alkyd-modified acrylic resin solution 4

Into a reactor, 72.73 parts by mass of the alkyd resin solution 1 obtained in Production Example 1 (40 parts by mass of the alkyd resin in the solution) and 17.27 parts by mass of xylene as a solvent were fed to obtain a liquid mixture. The liquid mixture was heated to 125°C under a nitrogen stream, and then a liquid mixture in which 60 parts by mass of a liquid mixture of monomer components (styrene: 27.0 parts by mass, methyl methacrylate (MMA): 8.2 parts by mass, n-butyl acrylate (BA): 23.8 parts by mass, and methacrylic acid (MAA): 1.0 parts by mass), 1.20 parts by mass of an initiator (t-butyl peroxybenzoate), and 16.67 parts by mass of xylene were included was dropwise added thereto over 3 hours, while maintaining the temperature at 125°C. After the dropwise addition, the mixture was kept at the same temperature (125°C) for 1 hour, and then 0.3 parts by mass of t-butyl peroxybenzoate was added thereto. The mixture was kept warm for 2 hours and then cooled, and 34.83 parts by mass of xylene was added in such a way that the non-volatile content was 50% by mass thereby preparing an alkyd-modified acrylic resin solution 4.
The acid value of the alkyd-modified acrylic resin in the prepared solution 4 was 6.7 mgKOH/g.

[Production Example 7] Preparation of alkyd-modified acrylic resin solution 5

Into a reactor, 90.91 parts by mass of the alkyd resin solution 1 obtained in Production Example 1 (50 parts by mass of the alkyd resin in the solution) and 9.10 parts by mass of xylene as a solvent were fed to obtain a liquid mixture. The liquid mixture was heated to 125°C under a nitrogen stream, and then a liquid mixture in which 50 parts by mass of a liquid mixture of monomer components (styrene: 22.2 parts by mass, methyl methacrylate (MMA): 7.0 parts by mass, n-butyl acrylate (BA): 19.8 parts by mass, and methacrylic acid (MAA): 1.0 parts by mass), 1.00 parts by mass of an initiator (t-butyl peroxybenzoate), and 16.67 parts by mass of xylene were included was dropwise added thereto over 3 hours, while maintaining the temperature at 125°C. After the dropwise addition, the mixture was kept at the same temperature (125°C) for 1 hour, and then 0.3 parts by mass of t-butyl peroxybenzoate was added thereto. The mixture was kept warm for 2 hours and then cooled, and 34.62 parts by mass of xylene was added in such a way that the non-volatile content was 50% by mass thereby preparing an alkyd-modified acrylic resin solution 5.
The acid value of the alkyd-modified acrylic resin in the prepared solution 5 was 7.6 mgKOH/g.

[Production Example 8] Preparation of alkyd-modified acrylic resin solution 6

Into a reactor, 36.36 parts by mass of the alkyd resin solution 1 obtained in Production Example 1 (20 parts by mass of the alkyd resin in the solution) and 33.64 parts by mass of xylene as a solvent were fed to obtain a liquid mixture. The liquid mixture was heated to 125°C under a nitrogen stream, and then a liquid mixture in which 80 parts by mass of a liquid mixture of monomer components (styrene: 36.0 parts by mass, methyl methacrylate (MMA): 11.4 parts by mass, n-butyl acrylate (BA): 31.5 parts by mass, 2-hydroxyethyl methacrylate (2-HEMA): 0.1 parts by mass, and methacrylic acid (MAA): 1.0 parts by mass), 1.50 parts by mass of an initiator (t-butyl peroxybenzoate), and 16.67 parts by mass of xylene were included was dropwise added thereto over 3 hours, while maintaining the temperature at 125°C. After the dropwise addition, the mixture was kept at the same temperature (125°C) for 1 hour, and then 0.3 parts by mass of t-butyl peroxybenzoate was added thereto. The mixture was kept warm for 2 hours and then cooled, and 35.13 parts by mass of xylene was added in such a way that the non-volatile content was 50% by mass thereby preparing an alkyd-modified acrylic resin solution 6.
The acid value of the alkyd-modified acrylic resin in the prepared solution 6 was 5.1 mgKOH/g.

[Production Example 9] Preparation of acrylic resin solution

Into a reactor was fed 50.00 parts by mass of xylene as a solvent, and the reactor is heated up to 125°C under a nitrogen stream, and then a liquid mixture in which 100 parts by mass of a liquid mixture of monomer components (styrene: 36.0 parts by mass, methyl methacrylate (MMA): 23.5 parts by mass, n-butyl acrylate (BA): 39.5 parts by mass, and methacrylic acid (MAA): 1.0 parts by mass), 1.50 parts by mass of an initiator (t-butyl peroxybenzoate), and 16.67 parts by mass of xylene were included was dropwise added thereto over 3 hours, while maintaining the temperature at 125°C. After the dropwise addition, the mixture was kept at the same temperature (125°C) for 1 hour, and then 0.3 parts by mass of t-butyl peroxybenzoate was added thereto. The mixture was kept warm for 2 hours and then cooled, and 35.13 parts by mass of xylene was added thereto in such a way that the non-volatile content was 50% by mass thereby preparing an acrylic resin solution.

The acid value of the acrylic resin in the prepared solution was 3.7 mg KOH/g.

The modified amounts, Mw and acid values of the resins obtained in Production Examples 3 to 9 are shown in Table 1. Note that, the modified amount was the amount of alkyd resin used since all the alkyd resins used were considered to be included in the alkyd-modified acrylic resin.

[Table 1]

| | | Production Example | | | | | | |
|---|---|---|---|---|---|---|---|---|
| | | 3 | 4 | 5 | 6 | 7 | 8 | 9 |
| Monomer composition | Styrene | 36.0 | 36.0 | 31.0 | 27.0 | 22.2 | 36.0 | 36.0 |
| | MMA | 17.5 | 11.5 | 10.5 | 8.2 | 7.0 | 11.4 | 23.5 |
| | BA | 35.5 | 31.5 | 27.5 | 23.8 | 19.8 | 31.5 | 39.5 |
| | MAA | 1.0 | 1.0 | 1.0 | 1.0 | 1.0 | 1.0 | 1.0 |
| | 2-HEMA | | | | | | 0.1 | |
| | Alkyd resin | 10.0 | 20.0 | 30.0 | 40.0 | 50.0 | 20.0 | 0 |
| | Total | 100.0 | 100.0 | 100.0 | 100.0 | 100.0 | 100.0 | 100.0 |
| Resin properties | Alkyd-modified amount | 10 | 20 | 30 | 40 | 50 | 20 | 0 |
| | Molecular weight (Mw) | 32,000 | 45,000 | 43,000 | 44,000 | 41,000 | 45,000 | 22,000 |
| | Acid value (mgKOH/g) | 4.4 | 5.1 | 6.1 | 6.7 | 7.6 | 5.1 | 3.7 |

[Production Example 10] Preparation of silyl ester-containing resin solution (A1)

Into a reaction vessel equipped with a stirrer, a reflux condenser, a thermometer, a nitrogen introduction tube, and a dropping funnel was fed 67 parts by mass of xylene, and, while the xylene being stirred with the stirrer under a nitrogen atmosphere, the reaction vessel was heated under normal pressure until the temperature of xylene in the reaction vessel was raised to 85°C. Into the reaction vessel, a monomer mixture in which 50 parts by mass of TIPSMA (triisopropylsilyl methacrylate), 30 parts by mass of MEMA (2-methoxyethyl methacrylate), 10 parts by mass of MMA (methyl methacrylate), 10 parts by mass of BA (butyl acrylate), and 1 part by mass of AMBN (2,2'-azobis-(2-methylbutyronitrile)) were included was added with a dropping funnel over 2 hours, while maintaining the temperature of xylene in the reaction vessel at 85°C.

Subsequently, 0.5 parts by mass of t-butylperoxyoctoate was further added into the reaction vessel, and under normal pressure, stirring was continued with a stirrer for 2 hours while maintaining the liquid temperature in the reaction vessel at 85°C. Thereafter, the liquid temperature in the reaction vessel was raised from 85°C to 110°C and heated for 1 hour, then 14 parts by mass of xylene was added into the reaction vessel to lower the liquid temperature in the reaction vessel, and stirring was stopped at the time when the liquid temperature dropped to 40°C, thereby preparing a silyl ester-containing resin solution (A1) [non-volatile content: 60.1% by mass].

[Production Example 11] Preparation of antifouling coating material

In a plastic container, 13.5 parts by mass of xylene, 16 parts by mass of a silyl ester-containing resin solution (A1), 6.5 parts by mass of gum rosin (acid value: 168, softening point: 75°C, Mw: 287), 0.5 parts by mass of ethyl silicate 28 (manufactured by COLCOAT CO., LTD.), 4.0 parts by mass of zinc oxide (manufactured by Kyushu Hakusui Corporation), 4.0 parts by mass of TTK talc (manufactured by Fukuoka Talc Co., LTD.), 2.0 parts by mass of titanium white R-930 (manufactured by ISHIHARA SANGYO KAISHA, LTD.), 2.0 parts by mass of red iron oxide 404 (manufactured by MORISHITA BENGARA KOGYO CO., LTD.), 2.0 parts by mass of Copper Omadine (manufactured by Arch Chemicals, Inc.), 48 parts by mass of cuprous oxide NC-301 (manufactured by NISSHIN CHEMCO LTD.), and 0.5 parts by mass of A-S-A D-120 (manufactured by ITOH OIL CHEMICALS CO.,LTD.) were blended, and glass beads were added thereto, and dispersion operation was carried out for 1 hour by a conventional method. Thereafter, 1.0 parts by mass of DISPARLON A630-20X (manufactured by Kusumoto Chemicals, Ltd.) was added thereto, and dispersion operation was further carried out for 15 minutes. The resultant dispersion liquid was filtered through a 60 mesh filter screen to prepare a silyl ester-containing hydrolyzable antifouling coating material.

[Example 1 to 34 and Comparative Example 1 to 5]

In a plastic container, the various materials described in the column of base component in Tables 2 to 4 were blended in the amount (parts by mass) of the numerical value described in each column, glass beads were added thereto, and the mixture was dispersed for 1 hour by a conventional method. The resultant dispersion liquid was filtered through a 80 mesh filter screen to prepare the base component of the anticorrosive coating composition.

In a plastic container, the various materials described in the column of curing agent component in Tables 2 to 4 were blended in the amount (parts by mass) of the numerical value described in each column, and the mixture was dispersed for 10 minutes by a conventional method. The resultant dispersion liquid was filtered through a 80 mesh filter screen to prepare the curing agent component of the anticorrosive coating composition.

The obtained base component and curing agent component were mixed by a conventional method immediately before coating application to prepare an anticorrosive coating composition.

Note that the details of the various components are shown in Table 5.

[Table 2]

| | | Example | | | | | |
|---|---|---|---|---|---|---|---|
| | | 1 | 2 | 3 | 4 | 5 | 6 |
| Base components | Epoxy resin | 26.1 | 26.1 | 26.1 | 26.1 | 26.1 | 26.1 |
| | Reactive diluent | 3.5 | 3.5 | 3.5 | 3.5 | 3.5 | 3.5 |
| | Alkyd resin solution 1 | 0.5 | 1.0 | 2.0 | 5.0 | 10.0 | 15.0 |
| | Alkyd resin solution 2 | | | | | | |
| | Talc | 17.4 | 17.4 | 17.4 | 17.4 | 17.4 | 17.4 |
| | Potassium feldspar | 18.7 | 18.7 | 18.7 | 18.7 | 18.7 | 18.7 |
| | Barium sulfate | 4.3 | 4.3 | 4.3 | 4.3 | 4.3 | 4.3 |
| | Titanium white | 3.48 | 3.48 | 3.48 | 3.48 | 3.48 | 3.48 |
| | Carbon black | 0.02 | 0.02 | 0.02 | 0.02 | 0.02 | 0.02 |
| | Acrylate monomer | 0.3 | 0.3 | 0.3 | 0.3 | 0.3 | 0.3 |
| | Silane coupling agent | 0.5 | 0.5 | 0.5 | 0.5 | 0.5 | 0.5 |
| | Antifoaming agent | 0.2 | 0.2 | 0.2 | 0.2 | 0.2 | 0.2 |
| | Anti-sagging agent | 0.8 | 0.8 | 0.8 | 0.8 | 0.8 | 0.8 |
| | Xylene | 2.7 | 2.7 | 2.7 | 2.7 | 2.7 | 2.7 |
| | n-butanol | 1.3 | 1.3 | 1.3 | 1.3 | 1.3 | 1.3 |
| | Propylene glycol monomethyl ether acetate | 1.7 | 1.7 | 1.7 | 1.7 | 1.7 | 1.7 |
| | (Subtotal) | 81.5 | 82.0 | 83.0 | 86.0 | 91.0 | 96.0 |
| Curing agent components | Polyamide curing agent | 11.7 | 11.7 | 11.7 | 11.7 | 11.7 | 11.7 |
| | Tertiary amine | 0.1 | 0.1 | 0.1 | 0.1 | 0.1 | 0.1 |
| | Benzyl alcohol | 1.2 | 1.2 | 1.2 | 1.2 | 1.2 | 1.2 |
| | (Subtotal) | 13.0 | 13.0 | 13.0 | 13.0 | 13.0 | 13.0 |
| Total | | 94.5 | 95.0 | 96.0 | 99.0 | 104.0 | 109.0 |
| Amount (% by mass) of solid content in composition | | 83.4 | 83.2 | 83.0 | 82.1 | 80.8 | 79.6 |
| Amount (% by volume) of solid content in composition | | 72.5 | 72.4 | 72.0 | 71.1 | 69.6 | 68.4 |
| VOC content (g/L) in composition | | 223.5 | 225.1 | 228.5 | 237.8 | 251.4 | 263.5 |
| Reaction ratio | | 0.3 | 0.3 | 0.3 | 0.3 | 0.3 | 0.3 |
| Amount (parts by mass) of solid content in resin (A) used | | 22.2 | 22.2 | 22.2 | 22.2 | 22.2 | 22.2 |
| Amount (parts by mass) of alkyd component used | | 0.3 | 0.6 | 1.1 | 2.8 | 5.5 | 8.3 |
| Amount (parts by mass) of solid content in resin (B) used | | 0.3 | 0.6 | 1.1 | 2.8 | 5.5 | 8.3 |
| Amount (parts by mass) of alkyd component with respect to 100 parts by mass of solid content in resin (A) | | 1.2 | 2.5 | 5.0 | 12.4 | 24.8 | 37.2 |
| Amount (parts by mass) of solid content in resin (B) with respect to 100 parts by mass of solid content in resin (A) | | 1.2 | 2.5 | 5.0 | 12.4 | 24.8 | 37.2 |

Table 2 (continued)

| | | Example | | | | |
|---|---|---|---|---|---|---|
| | | 7 | 8 | 9 | 10 | 11 |
| Base components | Epoxy resin | 26.1 | 26.1 | 26.1 | 26.1 | 26.1 |
| | Reactive diluent | 3.5 | 3.5 | 3.5 | 3.5 | 3.5 |
| | Alkyd resin solution 1 | 20.0 | 25.0 | 30.0 | 32.0 | |
| | Alkyd resin solution 2 | | | | | 8.0 |
| | Talc | 17.4 | 17.4 | 17.4 | 17.4 | 17.4 |
| | Potassium feldspar | 18.7 | 18.7 | 18.7 | 18.7 | 18.7 |
| | Barium sulfate | 4.3 | 4.3 | 4.3 | 4.3 | 4.3 |
| | Titanium white | 3.48 | 3.48 | 3.48 | 3.48 | 3.48 |
| | Carbon black | 0.02 | 0.02 | 0.02 | 0.02 | 0.02 |
| | Acrylate monomer | 0.3 | 0.3 | 0.3 | 0.3 | 0.3 |
| | Silane coupling agent | 0.5 | 0.5 | 0.5 | 0.5 | 0.5 |
| | Antifoaming agent | 0.2 | 0.2 | 0.2 | 0.2 | 0.2 |
| | Anti-sagging agent | 0.8 | 0.8 | 0.8 | 0.8 | 0.8 |
| | Xylene | 2.7 | 2.7 | 2.7 | 2.7 | 2.7 |
| | n-butanol | 1.3 | 1.3 | 1.3 | 1.3 | 1.3 |
| | Propylene glycol monomethyl ether acetate | 1.7 | 1.7 | 1.7 | 1.7 | 1.7 |
| | (Subtotal) | 101.0 | 106.0 | 111.0 | 113.0 | 89.0 |
| Curing agent components | Polyamide curing agent | 11.7 | 11.7 | 11.7 | 11.7 | 11.7 |
| | Tertiary amine | 0.1 | 0.1 | 0.1 | 0.1 | 0.1 |
| | Benzyl alcohol | 1.2 | 1.2 | 1.2 | 1.2 | 1.2 |
| | (Subtotal) | 13.0 | 13.0 | 13.0 | 13.0 | 13.0 |
| Total | | 114.0 | 119.0 | 124.0 | 126.0 | 102.0 |
| Amount (% by mass) of solid content in composition | | 78.5 | 77.6 | 76.6 | 76.3 | 81.7 |
| Amount (% by volume) of solid content in composition | | 67.3 | 66.3 | 65.5 | 65.1 | 70.4 |
| VOC content (g/L) in composition | | 274.0 | 283.2 | 291.5 | 294.5 | 239.8 |
| Reaction ratio | | 0.3 | 0.3 | 0.3 | 0.3 | 0.3 |
| Amount (parts by mass) of solid content in resin (A) used | | 22.2 | 22.2 | 22.2 | 22.2 | 22.2 |
| Amount (parts by mass) of alkyd component used | | 11.0 | 13.8 | 16.5 | 17.6 | 4.8 |
| Amount (parts by mass) of solid content in resin (B) used | | 11.0 | 13.8 | 16.5 | 17.6 | 4.8 |
| Amount (parts by mass) of alkyd component with respect to 100 parts by mass of solid content in resin (A) | | 49.6 | 62.0 | 74.4 | 79.3 | 21.6 |
| Amount (parts by mass) of solid content in resin (B) with respect to 100 parts by mass of solid content in resin (A) | | 49.6 | 62.0 | 74.4 | 79.3 | 21.6 |

[Table 3]

|  |  |  | Example | | | | |
|---|---|---|---|---|---|---|---|
|  |  |  | 12 | 13 | 14 | 15 | 16 |
| Base components | | Epoxy resin | 26.05 | 26.1 | 26.1 | 26.1 | 26.1 |
|  |  | Reactive diluent | 3.5 | 3.5 | 3.5 | 3.5 | 3.5 |
|  |  | Alkyd-modified acrylic resin solution 1 |  |  |  |  |  |
|  |  | Alkyd-modified acrylic resin solution 2 |  |  | 3.0 | 5.0 | 10.0 |
|  |  | Alkyd-modified acrylic resin solution 3 |  |  |  |  |  |
|  |  | Alkyd-modified acrylic resin solution 4 |  |  |  |  |  |
|  |  | Alkyd-modified acrylic resin solution 5 | 0.85 | 1.5 |  |  |  |
|  |  | Alkyd-modified acrylic resin solution 6 |  |  |  |  |  |
|  |  | Talc | 17.4 | 17.4 | 17.4 | 17.4 | 17.4 |
|  |  | Potassium feldspar | 18.7 | 18.7 | 18.7 | 18.7 | 18.7 |
|  |  | Barium sulfate | 4.3 | 4.3 | 4.3 | 4.3 | 4.3 |
|  |  | Titanium white | 3.48 | 3.48 | 3.48 | 3.48 | 3.48 |
|  |  | Carbon black | 0.02 | 0.02 | 0.02 | 0.02 | 0.02 |
|  |  | Acrylate monomer | 0.3 | 0.3 | 0.3 | 0.3 | 0.3 |
|  |  | Silane coupling agent | 0.5 | 0.5 | 0.5 | 0.5 | 0.5 |
|  |  | Antifoaming agent | 0.2 | 0.2 | 0.2 | 0.2 | 0.2 |
|  |  | Anti-sagging agent | 0.8 | 0.8 | 0.8 | 0.8 | 0.8 |
|  |  | Xylene | 2.7 | 2.7 | 2.7 | 2.7 | 2.7 |
|  |  | n-butanol | 1.3 | 1.3 | 1.3 | 1.3 | 1.3 |
|  |  | Propylene glycol monomethyl ether acetate | 1.7 | 1.7 | 1.7 | 1.7 | 1.7 |
|  |  | (Subtotal) | 81.8 | 82.5 | 84.0 | 86.0 | 91.0 |
| Curing agent components | | Polyamide curing agent | 11.7 | 11.7 | 11.7 | 11.7 | 11.7 |
|  |  | Polyamide adduct curing agent |  |  |  |  |  |
|  |  | Aliphatic amine curing agent 1 |  |  |  |  |  |
|  |  | Aliphatic amine curing agent 2 |  |  |  |  |  |
|  |  | Tertiary amine | 0.1 | 0.1 | 0.1 | 0.1 | 0.1 |
|  |  | Benzyl alcohol | 1.2 | 1.2 | 1.2 | 1.2 | 1.2 |
|  |  | (Subtotal) | 13.0 | 13.0 | 13.0 | 13.0 | 13.0 |
| Total | | | 94.8 | 95.5 | 97.0 | 99.0 | 104.0 |
| Amount (% by mass) of solid content in composition | | | 83.2 | 83.0 | 82.5 | 81.9 | 80.3 |
| Amount (% by volume) of solid content in composition | | | 72.3 | 72.0 | 71.4 | 70.6 | 68.7 |
| VOC content (g/L) in composition | | | 225.5 | 228.2 | 234.1 | 241.8 | 259.0 |
| Reaction ratio | | | 0.3 | 0.3 | 0.3 | 0.3 | 0.3 |
| Amount (parts by mass) of solid content in resin (A) used | | | 22.1 | 22.2 | 22.2 | 22.2 | 22.2 |
| Amount (parts by mass) of alkyd component used | | | 0.2 | 0.4 | 0.3 | 0.5 | 1.0 |
| Amount (parts by mass) of solid content in resin (B) used | | | 0.4 | 0.8 | 1.5 | 2.5 | 5.0 |
| Amount (parts by mass) of alkyd component with respect to 100 parts by mass of solid content in resin (A) | | | 1.0 | 1.7 | 1.4 | 2.3 | 4.5 |
| Amount (parts by mass) of solid content in resin (B) with respect to 100 parts by mass of solid content in resin (A) | | | 1.9 | 3.4 | 6.8 | 11.3 | 22.5 |

Table 3 (continued)

| | | Example | | | | |
|---|---|---|---|---|---|---|
| | | 17 | 18 | 19 | 20 | 21 |
| Base components | Epoxy resin | 26.1 | 26.1 | 26.1 | 26.1 | 26.1 |
| | Reactive diluent | 3.5 | 3.5 | 3.5 | 3.5 | 3.5 |
| | Alkyd-modified acrylic resin solution 1 | | | | | |
| | Alkyd-modified acrylic resin solution 2 | 10.0 | 20.0 | 20.0 | 20.0 | 20.0 |
| | Alkyd-modified acrylic resin solution 3 | | | | | |
| | Alkyd-modified acrylic resin solution 4 | | | | | |
| | Alkyd-modified acrylic resin solution 5 | | | | | |
| | Alkyd-modified acrylic resin solution 6 | | | | | |
| | Talc | 17.4 | 17.4 | 17.4 | 17.4 | 17.4 |
| | Potassium feldspar | 18.7 | 18.7 | 18.7 | 18.7 | 18.7 |
| | Barium sulfate | 4.3 | 4.3 | 4.3 | 4.3 | 4.3 |
| | Titanium white | 3.48 | 3.48 | 3.48 | 3.48 | 3.48 |
| | Carbon black | 0.02 | 0.02 | 0.02 | 0.02 | 0.02 |
| | Acrylate monomer | | 0.3 | 0.3 | 0.3 | 0.3 |
| | Silane coupling agent | 0.5 | 0.5 | 0.5 | 0.5 | 0.5 |
| | Antifoaming agent | 0.2 | 0.2 | 0.2 | 0.2 | 0.2 |
| | Anti-sagging agent | 0.8 | 0.8 | 0.8 | 0.8 | 0.8 |
| | Xylene | 2.7 | 2.7 | 2.7 | 2.7 | 2.7 |
| | n-butanol | 1.3 | 1.3 | 1.3 | 1.3 | 1.3 |
| | Propylene glycol monomethyl ether acetate | 1.7 | 1.7 | 1.7 | 1.7 | 1.7 |
| | (Subtotal) | 90.7 | 101.0 | 101.0 | 101.0 | 101.0 |
| Curing agent components | Polyamide curing agent | 11.7 | 11.7 | 19.0 | 30.0 | 14.8 |
| | Polyamide adduct curing agent | | | | | |
| | Aliphatic amine curing agent 1 | | | | | 2.5 |
| | Aliphatic amine curing agent 2 | | | | | |
| | Tertiary amine | 0.1 | 0.1 | 0.1 | 0.1 | 0.1 |
| | Benzyl alcohol | 1.2 | 1.2 | 1.2 | 1.2 | 1.2 |
| | (Subtotal) | 13.0 | 13.0 | 20.3 | 31.3 | 18.6 |
| Total | | 103.7 | 114.0 | 121.3 | 132.3 | 119.6 |
| Amount (% by mass) of solid content in composition | | 80.3 | 77.7 | 76.6 | 75.2 | 77.7 |
| Amount (% by volume) of solid content in composition | | 68.6 | 65.6 | 64.9 | 64.0 | 66.3 |
| VOC content (g/L) in composition | | 260.0 | 287.4 | 294.6 | 303.4 | 282.1 |
| Reaction ratio | | 0.3 | 0.3 | 0.5 | 0.8 | 0.8 |
| Amount (parts by mass) of solid content in resin (A) used | | 22.2 | 22.2 | 22.2 | 22.2 | 22.2 |
| Amount (parts by mass) of alkyd component used | | 1.0 | 2.0 | 2.0 | 2.0 | 2.0 |
| Amount (parts by mass) of solid content in resin (B) used | | 5.0 | 10.0 | 10.0 | 10.0 | 10.0 |
| Amount (parts by mass) of alkyd component with respect to 100 parts by mass of solid content in resin (A) | | 4.5 | 9.0 | 9.0 | 9.0 | 9.0 |
| Amount (parts by mass) of solid content in resin (B) with respect to 100 parts by mass of solid content in resin (A) | | 22.5 | 45.1 | 45.1 | 45.1 | 45.1 |

Table 3 (continued)

| | | Example | | | | |
|---|---|---|---|---|---|---|
| | | 22 | 23 | 24 | 25 | 26 |
| Base components | Epoxy resin | 26.1 | 26.1 | 26.1 | 26.1 | 26.1 |
| | Reactive diluent | 3.5 | | 3.5 | 3.5 | 3.5 |
| | Alkyd-modified acrylic resin solution 1 | | | | | |
| | Alkyd-modified acrylic resin solution 2 | 20.0 | 20.0 | 20.0 | 20.0 | 20.0 |
| | Alkyd-modified acrylic resin solution 3 | | | | | |
| | Alkyd-modified acrylic resin solution 4 | | | | | |
| | Alkyd-modified acrylic resin solution 5 | | | | | |
| | Alkyd-modified acrylic resin solution 6 | | | | | |
| | Talc | 17.4 | 17.4 | 17.4 | 17.4 | 17.4 |
| | Potassium feldspar | 18.7 | 18.7 | 18.7 | 18.7 | 18.7 |
| | Barium sulfate | 4.3 | 4.3 | 4.3 | 4.3 | 4.3 |
| | Titanium white | 3.48 | 3.48 | 3.48 | 3.48 | 3.48 |
| | Carbon black | 0.02 | 0.02 | 0.02 | 0.02 | 0.02 |
| | Acrylate monomer | 0.3 | 0.3 | 0.3 | 0.3 | 0.3 |
| | Silane coupling agent | 5.0 | 0.5 | 0.5 | 0.5 | 0.5 |
| | Antifoaming agent | 0.2 | 0.2 | 0.2 | 0.2 | 0.2 |
| | Anti-sagging agent | 0.8 | 0.8 | 0.8 | 0.8 | 0.8 |
| | Xylene | 2.7 | 2.7 | 2.7 | 2.7 | 2.7 |
| | n-butanol | 1.3 | 1.3 | 1.3 | 1.3 | 1.3 |
| | Propylene glycol monomethyl ether acetate | 1.7 | 1.7 | 1.7 | 1.7 | 1.7 |
| | (Subtotal) | 105.5 | 97.5 | 101.0 | 101.0 | 101.0 |
| Curing agent components | Polyamide curing agent | 11.7 | 11.7 | | 4.4 | 5.0 |
| | Polyamide adduct curing agent | | | 10.8 | | |
| | Aliphatic amine curing agent 1 | | | | 1.2 | |
| | Aliphatic amine curing agent 2 | | | | | 1.4 |
| | Tertiary amine | 0.1 | 0.1 | 0.1 | 0.1 | 0.1 |
| | Benzyl alcohol | 1.2 | 1.2 | 1.2 | 1.2 | 1.2 |
| | (Subtotal) | 13.0 | 13.0 | 12.1 | 6.9 | 7.7 |
| Total | | 118.5 | 110.5 | 113.1 | 107.9 | 108.7 |
| Amount (% by mass) of solid content in composition | | 78.5 | 77.0 | 77.8 | 79.1 | 79.0 |
| Amount (% by volume) of solid content in composition | | 67.3 | 64.1 | 65.7 | 67.1 | 67.1 |
| VOC content (g/L) in composition | | 273.8 | 300.2 | 288.0 | 274.1 | 274.3 |
| Reaction ratio | | 0.3 | 0.3 | 0.3 | 0.3 | 0.3 |
| Amount (parts by mass) of solid content in resin (A) used | | 22.2 | 22.2 | 22.2 | 22.2 | 22.2 |
| Amount (parts by mass) of alkyd component used | | 2.0 | 2.0 | 2.0 | 2.0 | 2.0 |
| Amount (parts by mass) of solid content in resin (B) used | | 10.0 | 10.0 | 10.0 | 9.0 | 9.0 |
| Amount (parts by mass) of alkyd component with respect to 100 parts by mass of solid content in resin (A) | | 9.0 | 9.0 | 9.0 | 9.0 | 9.0 |
| Amount (parts by mass) of solid content in resin (B) with respect to 100 parts by mass of solid content in resin (A) | | 45.1 | 45.1 | 45.1 | 45.1 | 45.1 |

Table 3 (continued)

| | | Example | | | | |
|---|---|---|---|---|---|---|
| | | 27 | 28 | 29 | 30 | 31 |
| Base components | Epoxy resin | 26.1 | 26.1 | 26.1 | 26.1 | 26.1 |
| | Reactive diluent | 3.5 | 3.5 | 3.5 | 3.5 | 3.5 |
| | Alkyd-modified acrylic resin solution 1 | | | | 20.0 | |
| | Alkyd-modified acrylic resin solution 2 | 30.0 | 32.0 | 35.0 | | |
| | Alkyd-modified acrylic resin solution 3 | | | | | 20.0 |
| | Alkyd-modified acrylic resin solution 4 | | | | | |
| | Alkyd-modified acrylic resin solution 5 | | | | | |
| | Alkyd-modified acrylic resin solution 6 | | | | | |
| | Talc | 17.4 | 17.4 | 17.4 | 17.4 | 17.4 |
| | Potassium feldspar | 18.7 | 18.7 | 18.7 | 18.7 | 18.7 |
| | Barium sulfate | 4.3 | 4.3 | 4.3 | 4.3 | 4.3 |
| | Titanium white | 3.48 | 3.48 | 3.48 | 3.48 | 3.48 |
| | Carbon black | 0.02 | 0.02 | 0.02 | 0.02 | 0.02 |
| | Acrylate monomer | 0.3 | 0.3 | 0.3 | 0.3 | 0.3 |
| | Silane coupling agent | 0.5 | 0.5 | 0.5 | 0.5 | 0.5 |
| | Antifoaming agent | 0.2 | 0.2 | 0.2 | 0.2 | 0.2 |
| | Anti-sagging agent | 0.8 | 0.8 | 0.8 | 0.8 | 0.8 |
| | Xylene | 2.7 | 2.7 | 2.7 | 2.7 | 2.7 |
| | n-butanol | 1.3 | 1.3 | 1.3 | 1.3 | 1.3 |
| | Propylene glycol monomethyl ether acetate | 1.7 | 1.7 | 1.7 | 1.7 | 1.7 |
| | (Subtotal) | 111.0 | 113.0 | 116.0 | 101.0 | 101.0 |
| Curing agent components | Polyamide curing agent | 11.7 | 11.7 | 11.7 | 11.7 | 11.7 |
| | Polyamide adduct curing agent | | | | | |
| | Aliphatic amine curing agent 1 | | | | | |
| | Aliphatic amine curing agent 2 | | | | | |
| | Tertiary amine | 0.1 | 0.1 | 0.1 | 0.1 | 0.1 |
| | Benzyl alcohol | 1.2 | 1.2 | 1.2 | 1.2 | 1.2 |
| | (Subtotal) | 13.0 | 13.0 | 13.0 | 13.0 | 13.0 |
| Total | | 124.0 | 126.0 | 129.0 | 114.0 | 114.0 |
| Amount (% by mass) of solid content in composition | | 75.4 | 75.0 | 74.4 | 77.7 | 77.7 |
| Amount (% by volume) of solid content in composition | | 63.3 | 62.8 | 62.2 | 65.6 | 65.6 |
| VOC content (g/L) in composition | | 309.7 | 313.5 | 319.0 | 287.1 | 287.6 |
| Reaction ratio | | 0.3 | 0.3 | 0.3 | 0.3 | 0.3 |
| Amount (parts by mass) of solid content in resin (A) used | | 22.2 | 22.2 | 22.2 | 22.2 | 22.2 |
| Amount (parts by mass) of alkyd component used | | 3.0 | 3.2 | 3.5 | 1.0 | 3.0 |
| Amount (parts by mass) of solid content in resin (B) used | | 15.0 | 16.0 | 17.5 | 10.0 | 10.0 |
| Amount (parts by mass) of alkyd component with respect to 100 parts by mass of solid content in resin (A) | | 13.5 | 14.4 | 15.8 | 4.5 | 13.5 |
| Amount (parts by mass) of solid content in resin (B) with respect to 100 parts by mass of solid content in resin (A) | | 67.6 | 72.1 | 78.9 | 45.1 | 45.1 |

Table 3 (continued)

| | | Example | | |
|---|---|---|---|---|
| | | 32 | 33 | 34 |
| Base components | Epoxy resin | 26.1 | 26.1 | 26.1 |
| | Reactive diluent | 3.5 | 3.5 | 3.5 |
| | Alkyd-modified acrylic resin solution 1 | | | |
| | Alkyd-modified acrylic resin solution 2 | | | |
| | Alkyd-modified acrylic resin solution 3 | | | |
| | Alkyd-modified acrylic resin solution 4 | 20.0 | | |
| | Alkyd-modified acrylic resin solution 5 | | 20.0 | |
| | Alkyd-modified acrylic resin solution 6 | | | 20.0 |
| | Talc | 17.4 | 17.4 | 17.4 |
| | Potassium feldspar | 18.7 | 18.7 | 18.7 |
| | Barium sulfate | 4.3 | 4.3 | 4.3 |
| | Titanium white | 3.48 | 3.48 | 3.48 |
| | Carbon black | 0.02 | 0.02 | 0.02 |
| | Acrylate monomer | 0.3 | 0.3 | 0.3 |
| | Silane coupling agent | 0.5 | 0.5 | 0.5 |
| | Antifoaming agent | 0.2 | 0.2 | 0.2 |
| | Anti-sagging agent | 0.8 | 0.8 | 0.8 |
| | Xylene | 2.7 | 2.7 | 2.7 |
| | n-butanol | 1.3 | 1.3 | 1.3 |
| | Propylene glycol monomethyl ether acetate | 1.7 | 1.7 | 1.7 |
| | (Subtotal) | 101.0 | 101.0 | 101.0 |
| Curing agent components | Polyamide curing agent | 11.7 | 11.7 | 11.7 |
| | Polyamide adduct curing agent | | | |
| | Aliphatic amine curing agent 1 | | | |
| | Aliphatic amine curing agent 2 | | | |
| | Tertiary amine | 0.1 | 0.1 | 0.1 |
| | Benzyl alcohol | 1.2 | 1.2 | 1.2 |
| | (Subtotal) | 13.0 | 13.0 | 13.0 |
| Total | | 114.0 | 114.0 | 114.0 |
| Amount (% by mass) of solid content in composition | | 77.7 | 77.7 | 77.7 |
| Amount (% by volume) of solid content in composition | | 65.6 | 65.6 | 65.6 |
| VOC content (g/L) in composition | | 287.8 | 288.3 | 287.4 |
| Reaction ratio | | 0.3 | 0.3 | 0.3 |
| Amount (parts by mass) of solid content in resin (A) used | | 22.2 | 22.2 | 22.2 |
| Amount (parts by mass) of alkyd component used | | 4.0 | 5.0 | 2.0 |
| Amount (parts by mass) of solid content in resin (B) used | | 10.0 | 10.0 | 10.0 |
| Amount (parts by mass) of alkyd component with respect to 100 parts by mass of solid content in resin (A) | | 18.0 | 22.5 | 9.0 |
| Amount (parts by mass) of solid content in resin (B) with respect to 100 parts by mass of solid content in resin (A) | | 45.1 | 45.1 | 45.1 |

[Table 4]

| | | Comparative Example | | | | |
|---|---|---|---|---|---|---|
| | | 1 | 2 | 3 | 4 | 5 |
| Base components | Epoxy resin | 26.1 | 26.1 | 26.1 | 26.1 | 26.1 |
| | Reactive diluent | 3.5 | 3.5 | 3.5 | 3.5 | 3.5 |
| | Acrylic resin solution | | 20.0 | | | |
| | Polyvinyl alkyl ether | | | 3.5 | 1.75 | |
| | Vinyl chloride-isobutyl-vinyl ether copolymer | | | | 1.75 | 3.5 |
| | Talc | 17.4 | 17.4 | 17.4 | 17.4 | 17.4 |
| | Potassium feldspar | 18.7 | 18.7 | 18.7 | 18.7 | 18.7 |
| | Barium sulfate | 4.3 | 4.3 | 4.3 | 4.3 | 4.3 |
| | Titanium white | 3.48 | 3.48 | 3.48 | 3.48 | 3.48 |
| | Carbon black | 0.02 | 0.02 | 0.02 | 0.02 | 0.02 |
| | Acrylate monomer | 0.3 | 0.3 | 0.3 | 0.3 | 0.3 |
| | Silane coupling agent | 0.5 | 0.5 | 0.5 | 0.5 | 0.5 |
| | Antifoaming agent | 0.2 | 0.2 | 0.2 | 0.2 | 0.2 |
| | Anti-sagging agent | 0.8 | 0.8 | 0.8 | 0.8 | 0.8 |
| | Xylene | 2.7 | 2.7 | 5.2 | 5.2 | 5.2 |
| | n-butanol | 1.3 | 1.3 | 1.3 | 1.3 | 1.3 |
| | Propylene glycol monomethyl ether acetate | 1.7 | 1.7 | 1.7 | 1.7 | 1.7 |
| | (Subtotal) | 81.0 | 101.0 | 87.0 | 87.0 | 87.0 |
| Curing agent components | Polyamide curing agent | 11.7 | 11.7 | 11.7 | 11.7 | 11.7 |
| | Tertiary amine | 0.1 | 0.1 | 0.1 | 0.1 | 0.1 |
| | Benzyl alcohol | 1.2 | 1.2 | 1.2 | 1.2 | 1.2 |
| | (Subtotal) | 13.0 | 13.0 | 13.0 | 13.0 | 13.0 |
| Total | | 94.0 | 114.0 | 100.0 | 100.0 | 100.0 |
| Amount (% by mass) of solid content in composition | | 83.5 | 77.7 | 82.0 | 82.0 | 82.0 |
| Amount (% by volume) of solid content in composition | | 72.7 | 65.6 | 71.2 | 71.0 | 70.8 |
| VOC content (g/L) in composition | | 221.8 | 286.2 | 236.4 | 237.9 | 239.5 |
| Reaction ratio | | 0.3 | 0.3 | 0.3 | 0.3 | 0.3 |

[Table 5]

| | | Solid content (% by mass) |
|---|---|---|
| Epoxy resin | E834-85X(T), OHTAKE-MEISHIN CHEMICAL, CO., LTD., Bisphenol A-type epoxy resin | 85 |
| Reactive diluent | Cardolite Lite 2513 HP, Cardolite Corporation, Alkylphenol glycidyl ether | 100 |
| Polyvinyl alkyl ether | Lutonal A-25, BASF, Polyvinyl ethyl ether | 100 |

(continued)

| | | Solid content (% by mass) |
|---|---|---|
| Vinyl chloride-isobutyl-vinyl ether copolymer | Laroflex MP-25, BASF | 100 |
| Talc | F-2 Talc, FUJI TALC INDUSTRIAL CO., LTD. | 100 |
| Potassium feldspar | Potassium feldspar KM325, Commercial Mineral Company | 100 |
| Barium sulfate | Barico 300W, HAKUSUI TECH CO., LTD. | 100 |
| Titanium white | Titanium white R-930, ISHIHARA SANGYO KAISHA, LTD. | 100 |
| Carbon black | MA-100, Mitsubishi Chemical Corporation | 100 |
| Acrylate monomer | M-CURE 400, SARTOMER COMPANY, INC | 100 |
| Silane coupling agent | KBM-403, Shin-Etsu Chemical Co., Ltd. | 100 |
| Antifoaming agent | BYK-1790, BYK Japan KK. | 100 |
| Anti-sagging agent | A-S-A T-250F, ITOH OIL CHEMICALS CO., LTD. | 100 |
| Polyamide curing agent | PA-66S, OHTAKE-MEISHIN CHEMICAL, CO., LTD. | 60 |
| Polyamide adduct curing agent | PA-23, OHTAKE-MEISHIN CHEMICAL, CO., LTD. | 60 |
| Aliphatic amine curing agent 1 | JEFFAMINE D-230, Huntsman Corporation | 100 |
| Aliphatic amine curing agent 2 | JEFFAMINE T-403, Huntsman Corporation | 100 |
| Tertiary amine | Ancamine K-54, Evonik Industries AG | 100 |

[Preparation of laminated antifouling coating film]

The various anticorrosive coating compositions obtained in Examples and Comparative Examples each were applied to a sandblasted plate (150 × 70 × 1.6 mm) in such a way that the dried film thickness thereon was about 200 $\mu$m, and then the sandblasted plate was immediately placed in the outdoor so as to face south with the surface having coating film upward and inclined at an angle of 45° to the ground, whereby the plates each were subjected to outdoor exposure for 1 day, 4 days, or 7 days.

Onto the anticorrosive coating film surface of the sandblasted plate subjected to the outdoor exposure, the antifouling coating material obtained in Production Example 11 was applied with an applicator such that the dried film thickness was 100 um, and then dried at 23°C for 7 days to form an antifouling coating film, thereby preparing a sandblasted plate with laminated antifouling coating film with an interval between coating applications of 1 day, 4 days or 7 days.

<Adhesiveness>

Each of the obtained sandblasted plates with a laminated antifouling coating film was immersed in artificial seawater at 50°C, and the adhesiveness between the anticorrosive coating film and the antifouling coating film after 30 days and 90 days from the start of the immersion were evaluated as follows.

On the antifouling coating film surface of the sandblasted plate with a laminated antifouling coating film, four incisions each having a depth to reach the anticorrosive coating film were made at an interval of 4 mm each in vertical and horizontal directions with an NT cutter (manufactured by NT Incorporated) to make nine squares, and Cellotape (registered trademark) was pressure bonded to the coating film surface having the squares made, and then the tape was quickly peeled off to observe the peeled state. The ratio of the area (delaminated area) of the coating film where delamination occurred between the anticorrosive coating film and the antifouling coating film after the peeling operation was calculated in a case where the area of the nine squares made was taken as 100%, and the adhesiveness was evaluated based on the following evaluation criteria. The results are shown in Table 6.

(Evaluation criteria)

0: The delamination area of the coating film is less than 5%.
1: The delamination area of the coating film is 5% or more and less than 25%.
2: The delamination area of the coating film is 25% or more and less than 50%.
3: The delamination area of the coating film is 50% or more.

<Anticorrosion Property>

·Cathodic protection test

The various anticorrosive coating compositions obtained in Examples and Comparative Examples each were spray-applied on an abrasive blast-cleaned steel plate (hereinafter, also referred to as a "test plate") having a dimension of 150 mm × 70 mm × 1.6 mm (thickness) in such a way that dried film thickness was about 250 um, and the spray-applied test plate was dried in an atmosphere of 23°C and 50% RH for 7 days to prepare a test plate with an anticorrosive coating film.
A zinc anode was connected to the test plate with an anticorrosive coating film in such a way that the electric current density was 5 mA/m² or less, and the appearances of the anticorrosive coating films after immersion in 3% salt water at 40°C for 30 days or 60 days were visually evaluated according to the following evaluation criteria.

(Evaluation criteria)

A: No change in blistering, cracking, rust, peeling, and hue.
B: Slight defect (change) observed in any of blistering, cracking, rust, peeling, and hue.
C: Clear change observed in any of blistering, cracking, rust, peeling, and hue.

·Salt spray test

A test plate with an anticorrosive coating film prepared in the same manner as in the cathodic protection test was continuously sprayed with salt water having a salt concentration of 5% under the condition of 35°C for 30 days or 60 days in accordance with JIS K 5600-7-1: 1999, followed by the visual evaluation of the appearance of the anticorrosive coating films according to the same evaluation criteria as in the cathodic anticorrosion test.

[Table 6]

| | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| Adhesiveness | Immersion period 30 Days | Interval between coating applications | 1 Day | 1 | 1 | 1 | 1 | 1 | 1 | 1 | 1 | 1 | 1 |
| | | | 4 Days | 2 | 1 | 0 | 0 | 0 | 0 | 0 | 0 | 0 | 0 |
| | | | 7 Days | 2 | 2 | 1 | 1 | 0 | 0 | 0 | 0 | 0 | 0 |
| | Immersion period 90 Days | Interval between coating applications | 1 Day | 2 | 1 | 1 | 1 | 1 | 1 | 1 | 0 | 0 | 0 |
| | | | 4 Days | 2 | 1 | 0 | 0 | 0 | 0 | 0 | 0 | 0 | 0 |
| | | | 7 Days | 2 | 2 | 1 | 1 | 1 | 1 | 1 | 1 | 1 | 1 |
| Anticorrosion Property | Cathodic protection | 30 Days after | | A | A | A | A | A | A | A | A | A | B |
| | | 60 Days after | | A | A | A | A | A | A | A | A | B | B |
| | Salt spray | 30 Days after | | A | A | A | A | A | A | A | A | A | A |
| | | 60 Days after | | B | B | B | B | B | B | B | B | B | B |

Table 6 (continued)

| | | | | Example | | | | | | | | | |
|---|---|---|---|---|---|---|---|---|---|---|---|---|---|
| | | | | 11 | 12 | 13 | 14 | 15 | 16 | 17 | 18 | 19 | 20 |
| Adhesiveness | Immersion period 30 Days | Interval between coating applications | 1 Day | 1 | 1 | 1 | 1 | 1 | 0 | 0 | 0 | 0 | 0 |
| | | | 4 Days | 0 | 2 | 2 | 1 | 1 | 0 | 0 | 0 | 0 | 0 |
| | | | 7 Days | 0 | 2 | 2 | 2 | 2 | 1 | 1 | 1 | 1 | 1 |
| | Immersion period 90 Days | Interval between coating applications | 1 Day | 1 | 2 | 1 | 1 | 1 | 0 | 0 | 0 | 0 | 1 |
| | | | 4 Days | 0 | 2 | 2 | 2 | 1 | 0 | 0 | 0 | 0 | 1 |
| | | | 7 Days | 1 | 2 | 2 | 2 | 2 | 1 | 1 | 1 | 1 | 1 |
| Anticorrosion Property | Cathodic protection | 30 Days after | | A | A | A | A | A | A | A | A | A | A |
| | | 60 Days after | | A | A | A | A | A | A | A | A | A | A |
| | Salt spray | 30 Days after | | A | A | A | A | A | A | A | A | A | A |
| | | 60 Days after | | B | B | B | B | B | B | B | B | B | A |

Table 6 (continued)

| | | | | Example | | | | | | | | | |
|---|---|---|---|---|---|---|---|---|---|---|---|---|---|
| | | | | 21 | 22 | 23 | 24 | 25 | 26 | 27 | 28 | 29 | 30 |
| Adhesiveness | Immersion period 30 Days | Interval between coating applications | 1 Day | 0 | 0 | 0 | 0 | 0 | 0 | 0 | 0 | 0 | 0 |
| | | | 4 Days | 0 | 0 | 0 | 0 | 0 | 0 | 0 | 0 | 0 | 0 |
| | | | 7 Days | 1 | 0 | 1 | 1 | 0 | 0 | 1 | 1 | 1 | 1 |
| | Immersion period 90 Days | Interval between coating applications | 1 Day | 0 | 0 | 0 | 0 | 0 | 0 | 0 | 0 | 0 | 0 |
| | | | 4 Days | 1 | 0 | 0 | 0 | 0 | 0 | 0 | 0 | 0 | 0 |
| | | | 7 Days | 1 | 1 | 1 | 1 | 1 | 1 | 1 | 1 | 1 | 1 |
| Anticorrosion Property | Cathodic protection | 30 Days after | | A | B | A | A | A | A | A | A | B | A |
| | | 60 Days after | | A | B | A | A | A | A | A | B | B | A |
| | Salt spray | 30 Days after | | A | A | A | A | A | A | A | A | A | A |
| | | 60 Days after | | B | B | B | B | B | B | B | B | B | B |

Table 6 (continued)

| | | | | Example | | | | Comparative Example | | | | |
|---|---|---|---|---|---|---|---|---|---|---|---|---|
| | | | | 31 | 32 | 33 | 34 | 1 | 2 | 3 | 4 | 5 |
| Adhesiveness | Immersion period 30 Days | Interval between coating applications | 1 Day | 0 | 0 | 0 | 0 | 2 | 0 | 2 | 2 | 2 |
| | | | 4 Days | 0 | 0 | 0 | 0 | 2 | 0 | 2 | 2 | 2 |
| | | | 7 Days | 1 | 1 | 1 | 1 | 3 | 2 | 3 | 3 | 3 |
| | Immersion period 90 Days | Interval between coating applications | 1 Day | 0 | 0 | 0 | 0 | 2 | 2 | 2 | 2 | 2 |
| | | | 4 Days | 0 | 0 | 0 | 0 | 2 | 3 | 3 | 3 | 3 |
| | | | 7 Days | 1 | 1 | 1 | 1 | 3 | 3 | 3 | 3 | 3 |
| Anticorrosion Property | Cathodic protection | 30 Days after | | A | A | A | A | A | C | A | A | A |
| | | 60 Days after | | A | A | A | A | A | C | A | A | A |
| | Salt spray | 30 Days after | | A | A | A | A | A | C | A | A | A |
| | | 60 Days after | | B | B | B | B | B | C | B | B | B |

**Claims**

1. An epoxy resin anticorrosive coating composition comprising: an epoxy resin (A); an alkyd resin (B); and an amine curing agent (C).

2. The epoxy resin anticorrosive coating composition according to claim 1, wherein the alkyd resin (B) comprises at least one resin selected from an alkyd resin (b1) and an alkyd-modified acrylic resin (b2).

3. The epoxy resin anticorrosive coating composition according to claim 1 or 2, wherein a content of the alkyd resin (B) is 1 to 80 parts by mass with respect to 100 parts by mass of a solid content of the epoxy resin (A).

4. The epoxy resin anticorrosive coating composition according to any one of claims 1 to 3, wherein the epoxy resin (A) comprises at least one resin selected from the group consisting of a bisphenol A-type epoxy resin, a bisphenol AD-type epoxy resin, a bisphenol F-type epoxy resin, and modified epoxy resins obtained by modifying these epoxy resins.

5. The epoxy resin anticorrosive coating composition according to any one of claims 1 to 4, wherein a volume ratio of a solid content is 50 to 100% by volume.

6. The epoxy resin anticorrosive coating composition according to any one of claims 1 to 5, wherein a volume ratio of a solid content is 60 to 80% by volume.

7. An anticorrosive coating film formed from the epoxy resin anticorrosive coating composition according to any one of claims 1 to 6.

8. A laminated antifouling coating film comprising: the anticorrosive coating film according to claim 7; and an antifouling coating film in this order.

9. The laminated antifouling coating film according to claim 8, wherein the antifouling coating film is a hydrolyzable antifouling coating film.

10. The laminated antifouling coating film according to claim 8 or 9, wherein the antifouling coating film comprises rosins.

**11.** An antifouling substrate, wherein the laminated antifouling coating film according to any one of claims 8 to 10 is laminated on a surface of a substrate in order from the substrate, the anticorrosive coating film, and the antifouling coating film.

**12.** The antifouling substrate according to claim 11, wherein the substrate is at least one selected from the group consisting of a ship, an underwater structure, and a fishing gear.

**13.** A method of manufacturing an antifouling substrate, comprising: a step of forming the laminated antifouling coating film according to any one of claims 8 to 10 on a surface of the substrate.

**INTERNATIONAL SEARCH REPORT**

| International application No. |
| --- |
| **PCT/JP2021/027839** |

| | |
| --- | --- |
| **A.  CLASSIFICATION OF SUBJECT MATTER** | |
| *C09D 5/00*(2006.01)i; *C09D 5/08*(2006.01)i; *C09D 5/16*(2006.01)i; *C09D 163/00*(2006.01)i; *C09D 167/08*(2006.01)i<br>FI:    C09D163/00; C09D167/08; C09D5/08; C09D5/16; C09D5/00 D | |
| According to International Patent Classification (IPC) or to both national classification and IPC | |

| |
| --- |
| **B.  FIELDS SEARCHED** |
| Minimum documentation searched (classification system followed by classification symbols)<br>    C09D1/00-201/10 |
| Documentation searched other than minimum documentation to the extent that such documents are included in the fields searched<br>    Published examined utility model applications of Japan 1922-1996<br>    Published unexamined utility model applications of Japan 1971-2021<br>    Registered utility model specifications of Japan 1996-2021<br>    Published registered utility model applications of Japan 1994-2021 |
| Electronic data base consulted during the international search (name of data base and, where practicable, search terms used) |

**C.  DOCUMENTS CONSIDERED TO BE RELEVANT**

| Category* | Citation of document, with indication, where appropriate, of the relevant passages | Relevant to claim No. |
| --- | --- | --- |
| X<br><br><br>Y | JP 2000-239569 A (KANSAI PAINT CO., LTD.) 05 September 2000 (2000-09-05)<br>    claims 1, 4, paragraphs [0001], [0008]-[0023], [0030]-[0031], [0053]-[0055], [0057]-<br>    [0077], examples 1-6, table 1 | 1-7<br><br><br>8-13 |
| Y | WO 2018/221266 A1 (CHUGOKU MARINE PAINTS, LTD.) 06 December 2018<br>(2018-12-06)<br>    claims 1, 2, 7-17, paragraphs [0001]-[0003], [0006], [0119]-[0122], [0144]-[0151] | 8-13 |
| Y | JP 2017-132960 A (CHUGOKU MARINE PAINTS, LTD.) 03 August 2017 (2017-08-03)<br>    claims 1-2, 12-13, 16-23, paragraphs [0001]-[0003], [0091]-[0093], [0097]-[0098], [0121]-<br>    [0124], [0147]-[0151] | 8-13 |
| X | JP 2007-045849 A (CENTRAL GLASS CO., LTD.) 22 February 2007 (2007-02-22)<br>    claims 1, 4-5, 8, paragraphs [0013], [0028]-[0029], [0040]-[0046], [0062]-[0077],<br>    examples 1-4, 6-11, tables 1, 3 | 1-2, 4-7 |

| ☑ Further documents are listed in the continuation of Box C. | ☑ See patent family annex. |
| --- | --- |

| | |
| --- | --- |
| *    Special categories of cited documents:<br>"A"   document defining the general state of the art which is not considered<br>      to be of particular relevance<br>"E"   earlier application or patent but published on or after the international<br>      filing date<br>"L"   document which may throw doubts on priority claim(s) or which is<br>      cited to establish the publication date of another citation or other<br>      special reason (as specified)<br>"O"   document referring to an oral disclosure, use, exhibition or other<br>      means<br>"P"   document published prior to the international filing date but later than<br>      the priority date claimed | "T"   later document published after the international filing date or priority<br>      date and not in conflict with the application but cited to understand the<br>      principle or theory underlying the invention<br>"X"   document of particular relevance; the claimed invention cannot be<br>      considered novel or cannot be considered to involve an inventive step<br>      when the document is taken alone<br>"Y"   document of particular relevance; the claimed invention cannot be<br>      considered to involve an inventive step when the document is<br>      combined with one or more other such documents, such combination<br>      being obvious to a person skilled in the art<br>"&"   document member of the same patent family |
| Date of the actual completion of the international search<br><br>**14 October 2021** | Date of mailing of the international search report<br><br>**26 October 2021** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**

| International application No. |
| --- |
| **PCT/JP2021/027839** |

**C.    DOCUMENTS CONSIDERED TO BE RELEVANT**

| Category* | Citation of document, with indication, where appropriate, of the relevant passages | Relevant to claim No. |
| --- | --- | --- |
| X | CN 105153880 A (TIANCHANG KAILIN CHEMICAL CO., LTD.) 16 December 2015 (2015-12-16)<br>claims 1, 5, 8, paragraphs [0013]-[0030], examples 1-5 | 1-3, 5, 7 |

Form PCT/ISA/210 (second sheet) (January 2015)

**INTERNATIONAL SEARCH REPORT**
Information on patent family members

International application No.

**PCT/JP2021/027839**

| Patent document cited in search report | | | Publication date (day/month/year) | Patent family member(s) | | | Publication date (day/month/year) |
|---|---|---|---|---|---|---|---|
| JP | 2000-239569 | A | 05 September 2000 | (Family: none) | | | |
| WO | 2018/221266 | A1 | 06 December 2018 | (Family: none) | | | |
| JP | 2017-132960 | A | 03 August 2017 | CN | 107022273 | A | |
| | | | | KR 10-2017-0091034 | | A | |
| JP | 2007-045849 | A | 22 February 2007 | (Family: none) | | | |
| CN | 105153880 | A | 16 December 2015 | (Family: none) | | | |

Form PCT/ISA/210 (patent family annex) (January 2015)

**REFERENCES CITED IN THE DESCRIPTION**

**Patent documents cited in the description**

- JP 2002053796 A
- JP 2019535868 A

- JP S4948480 B